# EUROPEAN PATENT SPECIFICATION

(11) **EP 3 280 766 B1**
(45) Date of publication and mention of the grant of the patent: **15.08.2018**
(21) Application number: 16719032.1
(22) Date of filing: 08.04.2016
(51) Int. Cl.: C08L 9/06, C07F 7/10, C08F 236/10, C08F 212/14, C08F 12/26, B60C 1/00

(54) **ELASTOMERIC COPOLYMERS BASED ON [BIS(TRIHYDROCARBYLSILYL)AMINOSILYL]-FUNCTIONALIZED STYRENE AND THEIR USE IN THE PREPARATION OF RUBBERS**
ELASTOMERE COPOLYMERE AUF BASIS VON [BIS (TRIHYDROCARBYLSILYL)]AMINOSILYL-FUNKTIONALISIERTEM STYROL UND DEREN VERWENDUNG ZUR HERSTELLUNG VON KAUTSCHUKEN
COPOLYMÈRES ÉLASTOMÈRES BASÉS SUR UN STYRÈNE [BIS(TRIHYDROCARBYLSILYLE)AMINOSILYL]-FONCTIONNALISÉ ET LEUR UTILISATION DANS LA PRÉPARATION DE CAOUTCHOUCS

(30) Priority: 10.04.2015 EP 15461525
(43) Date of publication of application: 14.02.2018
(73) Proprietor: Synthos S.A., 32-600 Oswiecim (PL)
(72) Inventor: JANOWSKI, Bartlomiej, PL-39-200 Debica (PL); ROGOZA, Jaroslaw, 32-060 Kryspinow (PL); KOZAK, Radoslaw, PL-41-500 Chorzow (PL); WEDA, Pawel, 44-193 Knurow (PL); ROBAK, Barbara, PL-44-122 Gliwice (PL)
(74) Representative: Eisenführ Speiser
(86) International application number: PCT/EP2016/057834
(87) International publication number: WO 2016/162528

(56) References cited:
- EP-A1- 2 772 515
- JP-A- 2004 059 781
- US-A- 4 894 409
- US-A1- 2007 123 631
- US-A1- 2009 023 861

## Description

### Field of the invention

The present invention relates to the use of specific styrene derivatives in the production of an elastomeric copolymer. The invention further relates to a method for producing an elastomeric copolymer and an elastic copolymer. Moreover, the invention relates to a method for preparing a rubber comprising vulcanizing the elastomeric copolymer, and a rubber as obtainable according to the method. Further, the invention relates to a rubber composition, a tire component comprising the rubber composition, and a tire comprising the tire component.

### Background of the invention

It is important for elastomeric copolymers that are used in tires, hoses, power transmission belts and other industrial products to have a good compatibility with fillers, such as carbon black and silica. To attain improved interaction with fillers, such elastomeric copolymers can be functionalized with various compounds, such as amines. It has also been recognized that carbon black, when employed as reinforcing filler in rubber compounds, should be well dispersed throughout the rubber in order to improve various physical properties.

EP 0 316 255 A1 discloses a process for end-capping polydienes by reacting a metal-terminated polydiene with a capping agent such as a halogenated nitrile, a heterocyclic aromatic nitrogen-containing compound or an alkyl benzoate. Additionally, EP 0 316 255 A1 discloses that both ends of a polydiene chain can be capped with polar groups by utilizing functionalized initiators, such as lithium amides.

US 4,935,471 A discloses methods of synthesizing living anionic polymerization initiators based on aromatic N-heterocyclic compounds such as pyrrole, imidazole, pyrazole, pyrazinyl, pyrimidine, pyridazinyl and phenanthroline derivatives and their use in the production of *N*-functionalized polybutadienes. A similar approach is disclosed in US 6,515,087 B2, EP 0 590 491 A1 and WO 2011/076377 where acyclic and cyclic amines are used in the preparation of the active anionic polymerization initiators and are utilized in a further step in the synthesis of di-N-functionalized butadiene-styrene copolymers.

The synthesis of di-*N*-functionalized butadiene-styrene polymers is also disclosed in US 4,196,154 A, US 4,861,742 A and US 3,109,871 A. However, in the processes for their preparation, aminofunctional aryl-methyl ketones are used and also serve as functionalizing terminating agents. The above described *N*-modification methods only allow the preparation of polydienes in which the polymer chain may contain no more than two moieties with amine functionality.

Another approach to prepare *N*-functionalized polymers with a different content of *N*-functional groups would be the incorporation of suitable styrene monomers into the polymer chain, which controlled addition into the reaction system would lead to a wide variety of styrene-butadiene rubbers with a different content of *N*-functional groups and thus exhibiting different ability to disperse inorganic fillers. EP 1 792 892 A2 discloses a method for the preparation of *N*-functionalized styrene monomers (by the reaction of a variety of acyclic and cyclic lithium amides with 1,3- or 1,4-divinylobenzene, 1,3-di(*iso*-propylene)benzene or a mixture of isomeric chloro-methylovinylbenzenes) that are used in a further step in the preparation of butadiene-styrene copolymer rubbers containing different amounts of amino-functional groups.

According to US 6,627,722 B2, vinylaromatic compounds, ring-substituted with one or two alkyleneiminealkyl groups, especially pyrrolidinylmethyl or hexamethyleniminomethyl groups, can be polymerized into elastomeric copolymers having low hysteresis and good compatibility with fillers, such as carbon black and silica. Improved polymer properties are achieved because the styrene derivatives improve the compatibility of the rubber with these fillers.

EP 2 772 515 A1 teaches a conjugated diene polymer obtained by polymerizing a monomer component including a conjugated diene component and a silicon-containing vinyl compound. The silicon-containing vinyl compound may be a silyl-substitued styrene. However, the compounds according to EP 2 772 515 A1 are hydrolytically unstable under the typical processing conditions, compare the *N*,*N*-bis(SiMe₃)₂ aniline derivatives disclosed in Organic Letters 2001, 3, 2729.

Therefore, it was the object of the present invention to overcome the disadvantages associated with the prior art and to provide functionalized styrene derivatives whose application in the synthesis of polydienes leads to in-chain modified polymer compositions that have better affinity to both of the two typical fillers commonly applied in tire production, i.e. silica and carbon black. The functionalized styrene derivatives should also be hydrolytically more stable than those of EP 2 772 515 A1.

This object was achieved by the use of [bis(trihydrocarbylsilyl)aminosilyl]-functionalized styrene derivatives of formula (I). These styrene derivatives are preferably used as comonomers in the production of elastomeric copolymers.

### Summary of the invention

Accordingly, the present invention relates to styrene derivatives that can be polymerized into elastomeric copolymers having good compatibility with fillers, such as silica and/or carbon black. The styrene derivatives of the present invention are typically incorporated into the elastomeric copolymer by being copolymerized with one or more conjugated diolefin monomers and optionally (and preferably) other monomers that are copolymerizable therewith, such as vinyl aromatic monomers. In any case, improved copolymer properties are achieved because the styrene derivatives of the present invention improve the compatibility of the resultant rubber with the types of fillers that are typically used in rubber compounds, such as silica and/or carbon black.

The present invention more specifically relates to monomers that are particularly useful for the copolymerization with conjugated diolefin monomers and optionally vinyl aromatic monomers, to produce elastomeric copolymers having better compatibility with fillers.

The monomer of the present invention is a styrene derivative of structural formula (I) 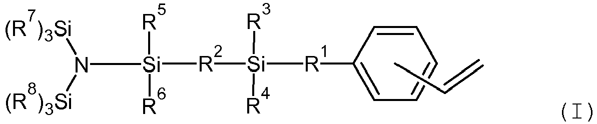 wherein R¹ and R² can be the same or different and represent a member selected from the group consisting of:
a) a single bond;
b) -(CH₂)ₙ-, wherein n represents an integer from 1 to 12;
c) -(CH₂CH₂Y)ₙ-, wherein n represents an integer from 1 to 12, and Y can independently be oxygen or sulfur;
d) -CH₂-(CH₂CH₂Y)ₙ-CH₂-, wherein n represents an integer from 1 to 12, and Y can independently be oxygen or sulfur;
e) - (CH₂CH₂NR)ₙ-, wherein n represents an integer from 1 to 12, and R can independently represent an alkyl group containing from 1 to 10 carbon atoms, or an aryl or aralkyl group containing from 6 to 10 carbon atoms;
f) -CH₂-(CH₂CH₂NR)ₙ-CH₂-, wherein n represents an integer from 1 to 12, and R can independently represent an alkyl group containing from 1 to 10 carbon atoms, or an aryl or aralkyl group containing from 6 to 10 carbon atoms;
g) -(CH₂SiR₂)ₙ-, wherein n represents an integer from 1 to 12, and R can independently represent an alkyl group containing from 1 to 10 carbon atoms, or an aryl or aralkyl group containing from 6 to 10 carbon atoms;
h) -CH₂-(CH₂SiR₂)ₙ-CH₂-, wherein n represents an integer from 1 to 12, and R can independently represent an alkyl group containing from 1 to 10 carbon atoms, or an aryl or aralkyl group containing from 6 to 10 carbon atoms;
i) -(OSiR₂)ₙ-, wherein n represents an integer from 1 to 12, and R can independently represent an alkyl group containing from 1 to 10 carbon atoms, or an aryl or aralkyl group containing from 6 to 10 carbon atoms; and
j) -CH₂-(OSiR₂)ₙ-CH₂-, wherein n represents an integer from 1 to 12, and R can represent an alkyl group containing from 1 to 10 carbon atoms, or an aryl or aralkyl group containing from 6 to 10 carbon atoms;

R³, R⁴, R⁵, R⁶ can be the same or different and represent an alkyl group containing from 1 to 10 carbon atoms, or an aryl or aralkyl group containing from 6 to 10 carbon atoms; and

R⁷ and R⁸ can be the same or different, and each R⁷ and R⁸ independently represents an alkyl group containing from 1 to 10 carbon atoms, or an aryl or aralkyl group containing from 6 to 10 carbon atoms.

Employing these functionalized styrene derivatives (containing the moiety {(R⁸)₃Si} {(R⁷)₃Si}NSiR⁶R⁵-(R²)-SiR³R⁴-(R¹) - in their structure) in the synthesis of SBR polymers not only increases the affinity of the modified polymers to the commonly used fillers via non-covalent interactions, but also provides for covalent interactions between the modified polymer and filler, in particular silica, due to the reactivity of the {(R⁸)₃Si} {(R⁷)₃Si}NSiR⁶R⁵- moiety.

Surprisingly, it was found that the preparation of rubber compounds based on styrene-butadiene rubbers modified with a small amount of styrene comonomer (I) leads to copolymers that give rubber compositions having by 32% better wet grip and by 24% better rolling resistance as compared to those prepared on the basis of non-functionalized styrene derivatives.

Further, it was found that the bis(trimethylsilyl)amine- or bis(trimethylsilyl)aminealkyl-substitued styrene derivatives disclosed in EP 2 772 515 A1 have a serious drawback, insofar as they are hydrolytically unstable, due to the high reactivity of the (Me₃Si)₂N-R- group with water, particularly under acidic or basic conditions (compare organic letters 2001, 3, 2729). Thus, the hydrolysis of molecular or macromolecular compounds containing e.g. the moiety (Me₃Si)₂N-R- leads to the formation of Me₃SiOSiMe₃, with simultaneous restoration of free H₂N-R- groups which in the final rubber composition can interact with the carbon black only by non-covalent bonds and with the silica by hydrogen bonding.

In contrast to those styrene derivatives containing a bis(trialkylsilyl)amine moiety ((R₃Si)₂N-R-), see e.g. EP 2 772 515 A1, compounds employed according to the present invention have a nitrogen atom that is surrounded by three silyl groups, such as in {(R⁸)₃Si} {(R⁷)₃Si}NSiR⁶R⁵-R²-. The styrene derivatives of the invention are surprisingly hydrolytically more stable (compare Organometallic Chemistry 2002, 655, 115, teaching (RMe₂Si)₂NSiMe₃ derivatives which were isolated by extraction of the organic layer with an aqueous solution of NH₄Cl).

Further, and in contrast to simple [(R₃Si)₂N-R-]-functionalized polymers, any partial hydrolysis of groups of the type {(R⁸)₃Si} {(R⁷)₃Si}NSiR⁶R⁵⁻R²- in the copolymer as functionalized according to the present invention will at elevated temperature advantageously lead to the formation of reactive silanol groups (HOSiR⁶R⁵-R²-). These groups are capable of the formation of a stable covalent bond with the silica filler through a [(SiO₂)O₃Si]-O-SiMe₂-R- bond sequence by the cross-condensation reaction between hydroxyl groups on silica surface [(SiO₂)O₃Si]-OH and HOSiMe₂-R-functionalized polymer as it was disclosed in J. Am. Chem. Soc. 2006, 128, 16266 for molecular trisilylamine derivatives of the type (RMe₂Si)₂NSiMe₂R', used in the modification of MCM-41's surface. Moreover, the remaining (Me₃Si)₂N-SiMe₂- moieties are capable to interact with carbon filler (e.g. carbon black) via a non-covalent interaction.

According to a first aspect, the invention relates to the use of the styrene derivative of structural formula (I) as defined above, in the production of an elastomeric copolymer.

According to a second aspect, the invention relates to a method for producing an elastomeric copolymer comprising subjecting one or more (preferably conjugated) diene monomer(s), optionally one or more vinyl aromatic monomer (s), and one or more styrene derivative(s) of formula (I) to anionic polymerization conditions.

According to a third aspect, the invention relates to an elastomeric copolymer comprising repeat units that are derived from
A) 20 wt.% to 99.95 wt.%, by weight of the copolymer, of one or more (preferably conjugated) diene monomer(s);
B) 0 wt.% to 60 wt.%, by weight of the copolymer, of one or more vinyl aromatic monomer(s); and
C) 0.05 wt.% to 50 wt.%, by weight of the copolymer, of one or more styrene derivative(s) of formula (I).

According to a fourth aspect, the invention relates to a method for preparing a rubber comprising vulcanizing the elastomeric copolymer according to the third aspect in the presence of one or more vulcanizing agent(s).

According to a fifth aspect, the invention relates to a rubber as obtainable according to the method of the fourth aspect. According to a sixth aspect, the invention relates to a rubber composition comprising x) a rubber component comprising the rubber according to the fifth aspect.

According to a seventh aspect, the invention relates to a tire component comprising the rubber composition according to the sixth aspect.

Finally, and according to an eight aspect, the invention relates to a tire comprising the tire component according to the seventh aspect.

### Detailed description of the invention

### The styrene derivative

The styrene derivative according to the present invention is of formula (I). Preferably, the two substituents on the aromatic ring are located in meta (i.e. in 1,3) or in para (i.e. in 1,4) position to one another, more preferably in para (1,4) position.

In a preferred embodiment, the styrene derivative is a para or meta isomer, i.e. is of formula (Ia) or (Ib)

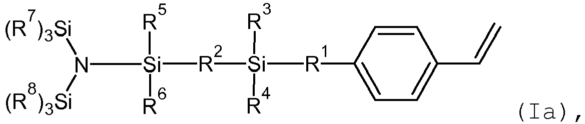

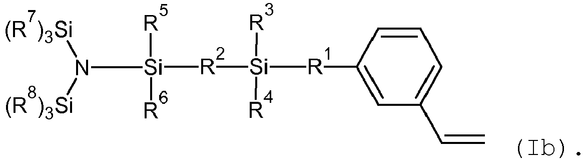

It is further preferred that the styrene derivative has R¹ selected from the group consisting of:
a) a single bond; and
b) -(CH₂)ₙ-, wherein n represents an integer from 1 to 12.

More preferably, R¹ is b) -(CH₂)ₙ-, wherein n represents an integer from 1 to 5, preferably n represents an integer from 1 to 3, in particular n is 1.

It is generally preferred that R² in the styrene derivative of formula (I) is (CH₂)₂. Exemplary styrene derivatives are selected from any one of formulae (1), (2), (3), (4), (5), and (6) 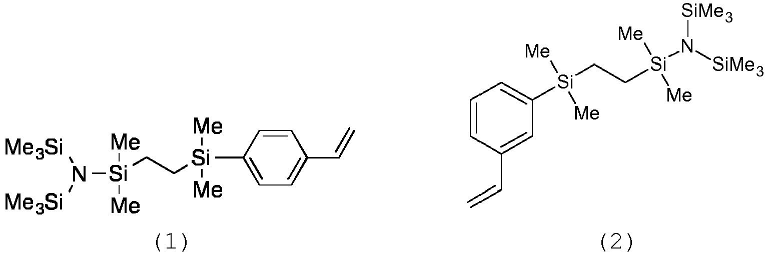 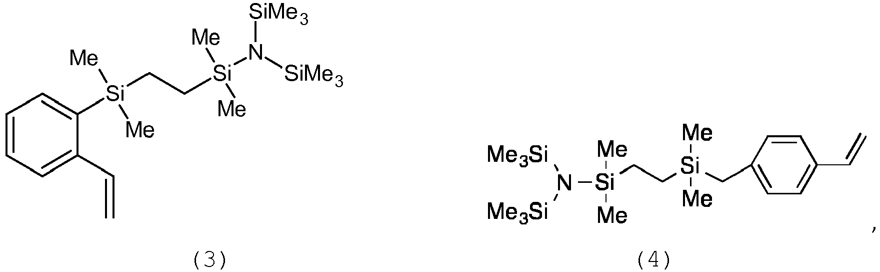 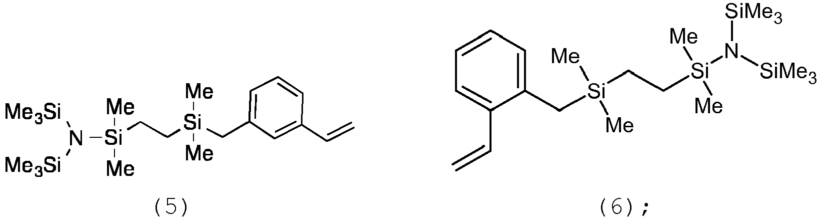 more preferably the styrene derivative of formula (I) is selected from any one of formulae (1), (2), (4), and (5);
most preferably the styrene derivative of formula (I) is selected from any one of formulae (1), (4), and (5).

Further details of the styrene derivatives of the invention and methods for their preparation are disclosed in the international application entitled "[Bis(trihydrocarbylsilyl)amino-silyl]-functionalized styrene and a method for its preparation" (PCT/EP2016/057735, attorney reference P 99715), filed on even date herewith, the disclosure of which application is incorporated herein in its entirety. International application PCT/EP2016/057735 (attorney reference P 99715) claims priority from EP15461526.4 (attorney reference P97192). EP15461526.4 was filed on even date with the present application's priority application, EP15461525.6.

It is further preferred according to the first aspect that the copolymer comprises, in addition to units derived from the styrene derivative of formula (I), units derived from one or more diene monomer(s), and optionally units derived from one or more vinyl aromatic monomer(s). Preferably, the diene monomer is a conjugated diene monomer.

According to the second aspect, the invention relates to a method for producing an elastomeric copolymer comprising subjecting i) one or more diene monomer(s), ii) optionally one or more vinyl aromatic monomer (s) and iii) one or more styrene derivative(s) of formula (I) to anionic polymerization conditions. Preferably, the diene monomer is a conjugated diene monomer.

The styrene derivative of this invention can be copolymerized into virtually any type of synthetic rubber. Preferably, the styrene derivative will be copolymerized with at least one conjugated diolefin monomer, such as 1,3-butadiene or isoprene.

Typically, from 0.05% to 50% (by weight of monomers) of the styrene derivative of formula (I) will be included in the polymerization. More typically, from 0.2% to 10% (by weight of monomers) of the styrene derivative of formula (I) will be included in the elastomeric copolymer. Good results can normally already be obtained by including 0.3% to 5% (by weight of monomers) of the styrene derivative of formula (I) in the elastomeric copolymer. It is typically preferred to incorporate 0.5% to 2% (by weight of monomers) of the functionalized monomer of formula (I) into the elastomeric copolymer.

At least one vinyl aromatic monomer can also be included in the polymerization. In cases where vinyl aromatic monomers, such as styrene or α-methyl styrene, are copolymerized into the rubbery copolymer, they will be included at a level of up to 60%, preferably 10% to 60% (by weight of monomers). Vinyl aromatic monomers will more typically be incorporated into the elastomeric copolymer at a level which is within the range of 10% to 50% (by weight of monomers), preferably 20% to 50% (by weight of monomers).

For instance, the elastomeric copolymer can be comprised of repeat units that are derived from 58% to 90% (by weight of monomers) of 1,3-butadiene, from 8% to 40% (by weight of monomers) of styrene, and from 0.05% to 50% (by weight of monomers) of the styrene derivative of formula (I).

According to the present invention, polymerization and recovery of polymer are suitably carried out according to various methods suitable for diene monomer polymerization processes. This includes batch-wise, semi-continuous, or continuous operations under conditions that exclude air and other atmospheric impurities, particularly oxygen and moisture. Preferably, the polymerization is batch-wise or continuous. The commercially preferred method of polymerization is anionic solution polymerization.

In batch operations, the polymerization time of functionalized monomers can be varied as desired. Polymerization in batch processes may be terminated when monomer is no longer absorbed, or earlier, if desired, e.g., if the reaction mixture becomes too viscous. In continuous operations, the polymerization mixture may be passed through a reactor of any suitable design. The polymerization reactions in such cases are suitably adjusted by varying the residence time. Residence times vary with the type of reactor system and range, for example, from 10 to 15 minutes to 24 or more hours.

The temperature in the polymerization reaction is preferably in a range of from -20 to 150°C, more preferably 0 to 120°C. The polymerization reaction can be conducted under the pressure which appears in the reaction, but is preferably conducted at a pressure which is sufficient to keep the monomer substantially in a liquid phase. That is, the polymerization pressure used differs depending upon the individual substances to be polymerized, the polymerization medium used, and the polymerization temperature employed; however, a higher pressure may be used if necessary and such a pressure can be obtained by an appropriate means such as by pressurization of the reactor using a gas that is inert to the polymerization reaction.

The styrene derivatives of this invention can be incorporated into virtually any type of elastomeric copolymer that is capable of being made by solution polymerization with an anionic initiator. The polymerization employed in synthesizing the elastomeric copolymers will normally be carried out in a hydrocarbon solvent. The solvents used in such solution polymerizations normally contain from 4 to 10 carbon atoms per molecule and are liquids under the conditions of the polymerization. Some representative examples of suitable organic solvents include pentane, isooctane, cyclohexane, n-hexane, benzene, toluene, xylene, ethylbenzene, tetrahydrofuran, and the like, alone or in admixture.

In the solution polymerization, there is normally a total of from 5 to 30 wt.% monomers in the polymerization medium. Such polymerization media are typically comprised of the organic solvent and monomers. In most cases, it is preferred for the polymerization medium to contain from 10 to 25 wt.% monomers. It is generally more preferred for the polymerization medium to contain 10 to 20 wt.% monomers.

### Diolefin (diene) monomers

The elastomeric copolymers made by the process of this invention can be made by random copolymerization of the styrene derivative of the invention with (either conjugated or nonconjugated) diolefins (dienes). Conjugated diolefin monomers containing from 4 to 8 carbon atoms are generally preferred. Some representative examples of conjugated diene monomers that can be polymerized into elastomeric copolymers include 1,3-butadiene, isoprene, 1,3-pentadiene, 2,3-dimethyl-1,3-butadiene, 2-methyl-1,3-pentadiene, 2,3-dimethyl-1,3-pentadiene, 2-phenyl-1,3-butadiene, and 4,5-diethyl-1,3-octadiene. Preferably, the conjugated diene monomer is 1,3-butadiene, isoprene, in particular 1,3-butadiene.

Preferably, the amount of A) conjugated diene monomer(s) is 40 to 90 wt.%, by weight of the copolymer, preferably 50 to 90 wt.%, by weight of the copolymer, in particular 70 to 90 wt.%, by weight of the copolymer.

Vinyl-substituted aromatic monomers can also be copolymerized with one or more diene monomers into elastomeric copolymers, for example styrene-butadiene rubber (SBR).

### Vinyl aromatic monomers

Some representative examples of vinyl-substituted aromatic monomers that can be utilized in the synthesis of elastomeric copolymers include styrene, 1-vinylnaphthalene, 3-methylstyrene, 3,5-diethylstyrene, 4-propylstyrene, 2,4,6-trimethylstyrene, 4-dodecylstyrene, 3-methyl-5-n-hexylstyrene, 4-phenylstyrene, 2-ethyl-4-benzylstyrene, 3,5-diphenylstyrene, 2,3,4,5-tetraethylstyrene, 3-ethyl-1-vinylnaphthalene, 6-isopropyl-1-vinylnaphthalene, 6-cyclohexyl-1-vinylnaphthalene, 7-dodecyl-2-vinylnaphthalene, α-methylstyrene, and the like. Preferably, the vinyl aromatic monomer is selected from styrene, 3-methylstyrene and α-methylstyrene, in particular the vinyl aromatic monomer is styrene.

### Elastomeric copolymers

Some representative examples of elastomeric copolymers that can be functionalized by using the styrene derivatives of this invention include polybutadiene, polyisoprene, styrene-butadiene rubber (SBR), α-methylstyrene-butadiene rubber, α-methylstyrene-isoprene rubber, styrene-isoprene-butadiene rubber (SIBR), styrene-isoprene rubber (SIR), isoprene-butadiene rubber (IBR), α-methylstyrene-isoprene-butadiene rubber and α-methylstyrene-styrene-isoprene-butadiene rubber. In cases where the elastomeric copolymer is comprised of repeat units that are derived from two or more monomers, the repeat units which are derived from the different monomers, including the styrene derivative, will normally be distributed in an essentially random manner. The repeat units that are derived from the monomers differ from the monomer in that a double bond is normally consumed in by the polymerization reaction.

The elastomeric copolymer can be made by solution polymerization in a batch process or in a continuous process by continuously charging at least one conjugated diolefin monomer, the styrene derivative, and any optional additional monomers into a polymerization zone. The polymerization zone will typically be a polymerization reactor or a series of polymerization reactors. The polymerization zone will normally provide agitation to keep the monomers, polymer, initiator, and modifier well dispersed throughout the organic solvent in the polymerization zone. Such continuous polymerizations are typically conducted in a multiple-reactor system. The elastomeric copolymer as synthesized is continuously withdrawn from the polymerization zone. Incremental addition, or a chain transfer agent, such as 1,2-butadiene, may be used in order to avoid excessive gel formation. The monomer conversion attained in the polymerization zone will normally be at least about 85%. It is preferred for the monomer conversion to be at least about 90%.

### Anionic initiator

The polymerization will typically be initiated with an anionic initiator, such as organic lithium compound, a lithium amide compound, or a functionalized initiator containing a nitrogen atom. As the organic lithium compound, those having a hydrocarbon group having 1 to 20 carbon atoms are preferred. Examples are methyl lithium, ethyl lithium, n-propyl lithium, isopropyl lithium, n-butyl lithium, sec-butyl lithium, tert-octyl lithium, n-decyl lithium, phenyl lithium, 2-naphthyl lithium, 2-butylphenyl lithium, 4-phenylbutyl lithium, cyclohexyl lithium, cyclopentyl lithium, and a reaction product of diisopropenylbenzene with butyl lithium. n-Butyl lithium and sec-butyl lithium are preferred.

Examples of lithium amide compounds are lithium hexamethyleneimide, lithium pyrrolidide, lithium piperidide, lithium hepta-methyleneimide, lithium dodecamethyleneimide, lithium dimethylamide, lithium diethylamide, lithium dibutylamide, lithium dipropylamide, lithium diheptylamide, lithium dihexyl-amide, lithium dioctylamide, lithium di-2-ethylhexylamide, lithium didecylamide, lithium N-methylpiperadide, lithium ethylpropylamide, lithium ethylbutylamide, lithium ethyl-benzylamide and lithium methylphenethylamide. Preferred from the standpoint of the polymerization initiation ability are cyclic lithium amides such as lithium hexamethyleneimide, lithium pyrrolidide, lithium piperidide, lithium hepta-methyleneimide and lithium dodecamethyleneimide; and particularly preferred are lithium hexamethyleneimide, lithium pyrrolidide and lithium piperidide.

The lithium amide compound, if present, is, in general, prepared beforehand from a secondary amine and a lithium compound and then used in polymerization; however, it may be prepared in the polymerization system (*in situ*). The amount of the lithium initiator utilized will vary with the monomers being polymerized and with the molecular weight that is desired for the polymer being synthesized.

Functionalized initiator is preferably made by the reaction of an organic lithium compound, such as n-butyl lithium, with a vinylbenzylamine represented by following formula (II): 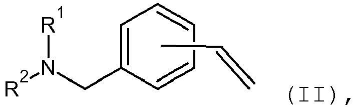 wherein R¹ and R² each independently represent an alkyl group or an aralkyl group, or R¹ and R² are bonded to each other to form a cyclic group optionally containing at least one nitrogen, as a heteroatom. The mole ratio of organic lithium compound to vinylbenzylamine is preferably from 0.5:1 to 1:1. It is typically preferred to incorporate 0.05% to 1% (by weight of monomers) of the functionalized initiator of formula (II) into the elastomeric copolymer.

Further details of functionalized initiators based on vinylbenzylamine of formula (II) are disclosed in the international application entitled "Initiators for the copolymerisation of diene monomers and vinyl aromatic monomers" (PCT/EP2016/057757, attorney reference P 99716), filed on even date herewith, the disclosure of which application is incorporated herein in its entirety. International application PCT/EP2016/057757 (attorney reference P 99716) claims priority from EP15461524.9 (attorney reference P94711). EP15461524.9 was filed on even date with the present application's priority application, EP15461525.6.

In a second aspect, the invention relates to an elastomeric copolymer comprising repeat units that are derived from
A) 20 wt.% to 99.95 wt.%, by weight of the copolymer, of one or more diene monomer(s);
B) 0 wt.% to 60 wt.%, by weight of the copolymer, of one or more vinyl aromatic monomer(s); and
C) 0.05 wt.% to 50 wt.%, by weight of the copolymer, of one or more styrene derivative(s) of formula (I).

Preferably, the diene monomer is a conjugated diene. More preferably, the conjugated diene monomer is selected from 1,3-butadiene, isoprene, 1,3-pentadiene, 2,3-dimethyl-1,3-butadiene, 2-methyl-1,3-pentadiene, 2,3-dimethyl-1,3-pentadiene, 2-phenyl-1,3-butadiene, and 4,5-diethyl-1,3-octadiene. Most preferably, the conjugated diene monomer is selected from 1,3-butadiene and isoprene, and in particular, the conjugated diene monomer is 1,3-butadiene.

Typically, the amount of A) conjugated diene monomer(s) is 40 to 90 wt.%, by weight of the copolymer, preferably 50 to 90 wt.%, by weight of the copolymer, in particular 60 to 90 wt.%, by weight of the copolymer.

Preferably, the vinyl aromatic monomer in the elastomeric copolymer is selected from styrene, 1-vinylnaphthalene, 3-methylstyrene, 3,5-diethylstyrene, 4-propylstyrene, 2,4,6-trimethylstyrene, 4-dodecylstyrene, 3-methyl-5-n-hexylstyrene, 4-phenylstyrene, 2-ethyl-4-benzylstyrene, 3,5-diphenylstyrene, 2,3,4,5-tetraethylstyrene, 3-ethyl-1-vinylnaphthalene, 6-isopropyl-1-vinylnaphthalene, 6-cyclohexyl-1-vinylnaphthalene, 7-dodecyl-2-vinylnaphthalene, and α-methylstyrene. Vinyl-benzylamines of formula (II) are also suitable vinyl aromatic monomers.

More preferably, the vinyl aromatic monomer is selected from styrene, 3-methylstyrene and α-methylstyrene, and the vinyl aromatic monomer is in particular styrene. Most preferably, component B) is styrene.

Typically, the amount of B) vinyl aromatic monomer(s) in the elastomeric copolymer is 10 to 60 wt.%, by weight of the copolymer, preferably 10 to 50 wt.%, by weight of the copolymer, in particular 20 to 50 wt.%, by weight of the copolymer.

Preferably, the elastomeric copolymer comprises the styrene derivative component C) in an amount of 0.05 to 50 wt.%, by weight of the copolymer, preferably 0.2 to 10 wt.%, by weight of the copolymer, in particular 0.5 to 2 wt.%, by weight of the copolymer.

### Polar modifiers

The polymerization process of this invention is normally conducted in the presence of polar modifiers, such as tertiary amines, alcoholates or alkyltetrahydrofurfuryl ethers. Some representative examples of specific polar modifiers that can be used include methyltetrahydrofurfuryl ether, ethyltetra-hydrofurfuryl ether, propyltetrahydrofurfuryl ether, butyl-tetrahydrofurfuryl ether, hexyltetrahydrofurfuryl ether, octyltetrahydrofurfuryl ether, dodecyltetrahydrofurfuryl ether, diethyl ether, di-n-propyl ether, diisopropyl ether, di-n-butyl ether, tetrahydrofuran, dioxane, ethylene glycol dimethyl ether, ethylene glycol diethyl ether, diethylene glycol dimethyl ether, diethylene glycol diethyl ether, triethylene glycol dimethyl ether, trimethylamine, triethylamine, N,N,N',N'-tetramethylethylenediamine, N-methylmorpholine, N-ethylmorpholine, and N-phenylmorpholine.

A potassium or sodium compound may be added together with the polymerization initiator when it is intended to increase the reactivity of the polymerization initiator or when it is intended to arrange the aromatic vinyl compound at random in the polymer obtained or to allow the obtained polymer to contain the aromatic vinyl compound as a single chain. As the potassium or sodium added together with the polymerization initiator, there can be used, for example: alkoxides and phenoxides, typified by isopropoxide, tert-butoxide, tert-amyloxide, n-hepta-oxide, benzyloxide and phenoxide; potassium or sodium salts of organic sulfonic acids, such as dodecylbenzensulfonic acid, tetradecylbenzenesulfonic acid, hexadecylbenzenesulfonic acid, octadecylbenzenesulfonic acid and the like.

The polar modifier will typically be employed at a level wherein the molar ratio of the polar modifier to the lithium initiator is within the range of about 0.01:1 to about 5:1. The potassium or sodium compound is preferably added in an amount of 0.005 to 0.5 mol per mol equivalent of the alkali metal of the polymerization initiator. When the amount is less than 0.005 mol equivalent, the addition effect of the potassium compound (the increase in the reactivity of polymerization initiator and the randomization or single chain addition of aromatic vinyl compound) may not appear. Meanwhile, when the amount is more than 0.5 mol equivalent, there may be a reduction in polymerization activity and a striking reduction in productivity and, moreover, there may be a reduction in the modification efficiency in the primary modification reaction.

Preferably, the elastomeric copolymer of the invention comprises units having a star structure that are produced by the reaction of metal-terminated living linear copolymer with one or more coupling agents.

The coupling agent may be a tin halide coupling agent. Preferably, the tin halide coupling agent is tin tetrachloride.

Alternatively, the coupling agent is a silicon halide coupling agent. Preferably, the silicon halide coupling agent is selected from silicon tetrachloride, silicon tetrabromide, silicon tetrafluoride, silicon tetraiodide, hexachlorodisilane, hexabromodisilane, hexafluorodisilane, hexaiododisilane, octachlorotrisilane, octabromotrisilane, octafluorotrisilane, octaiodotrisilane, hexachlorodisiloxane, 2,2,4,4,6,6-hexa-chloro-2,4,6-trisilaheptane, 1,2,3,4,5,6-hexakis[2-(methyldichlorosilyl)ethyl]benzene, and alkyl silicon halides of general formula (III)

R⁹ₙ-Si-X₄₋ₙ (III),

wherein R⁹ is a monovalent aliphatic hydrocarbon group having 1 to 20 carbon atoms or a monovalent aromatic hydrocarbon group having 6 to 18 carbon atoms; n is an integer of 0 to 2; and X can be a chlorine, bromine, fluorine or iodine atom.

Preferably, the fraction of units having star structure in the elastomeric copolymer is between 15 and 75%, by weight of the copolymer.

It is further preferred that the elastomeric copolymer contains one or more moieties reactive toward a silica surface. Preferably, the moiety is derived from units of general formula (IV) or (V)

R¹⁰ₙ-Si-(OR¹¹)₄₋ₙ (IV),

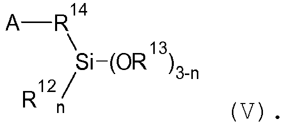

In general formula (IV), R¹⁰ and R¹¹ are each independently a monovalent aliphatic hydrocarbon group having 1 to 20 carbon atoms or a monovalent aromatic hydrocarbon group having 6 to 18 carbon atoms; n is an integer of 0 to 2; when there are a plurality of OR¹¹s, the plurality of OR¹¹s may be the same or different from each other; and there is no active proton in the molecule.

In general formula (V), A is a monovalent group having at least one functional group selected from the group consisting of epoxy, thioepoxy, isocyanate, imine, cyclic tertiary amine, acyclic tertiary amine, pyridine, silazane and disulfide; R¹⁴ is a single bond or a divalent hydrocarbon group; R¹² and R¹³ are each independently a monovalent aliphatic hydrocarbon group having 1 to 20 carbon atoms or a monovalent aromatic hydrocarbon group having 6 to 18 carbon atoms; b is an integer of 0 to 2; when there are a plurality of OR¹³s, the plurality of OR¹³s may be the same or different from each other; and there is no active proton in the molecule.

### Coupling agent

The polymerization is normally carried out until high conversions of at least about 90% are attained. The polymerization is then typically terminated by the addition of a coupling agent. For example, a tin halide and/or silicon halide can be used as a coupling agent. The tin halide and/or the silicon halide are continuously added in cases where asymmetrical coupling is desired. The coupling agents can, in a hydrocarbon solution, be added to the polymerization admixture with suitable mixing for distribution and reaction.

It should be noted that, according to the present invention, the fraction of (co)polymer chains being coupled can vary between 15 to 75%, which is achieved by controlled addition of coupling agent, in the amount required to bond the desired portion of the (co)polymer chains. The exact amount of coupling agent is calculated based on its theoretical functionality and required coupling fraction.

### Functionalizing agents

To obtain polymer-containing moieties reactive toward a silica surface, functionalization may be effected using a functionalizing agent, e.g. of the general formula (IV) and (V) above. It should be noted that functionalizing agent reacts with any remaining living polymer chains which were not reacted earlier with coupling agent. Recommended amounts of functionalizing agent could be in range from 0.01 to 10 mol per 1 mol of living chain ends, more preferable is a range from 0.1 mol to 1 mol per 1 mol of living chain ends, to obtain the desired Mooney viscosity.

A fourth aspect of the invention is a method for preparing a rubber comprising vulcanizing the elastomeric copolymer according to the third aspect in the presence of one or more vulcanizing agent(s).

A fifth aspect of the invention is a rubber as obtainable according to the method of the fourth aspect.

A sixth aspect of the invention is a rubber composition comprising x) a rubber component comprising the rubber according to the fifth aspect. Preferably, the rubber component x) also comprises one or more further rubbery polymers. Further rubbery polymers are preferably selected from the group consisting of natural rubber, synthetic isoprene rubber, butadiene rubber, styrene-butadiene rubber, ethylene-α-olefin copolymer rubber, ethylene-α-olefin-diene copolymer rubber, acrylonitrile-butadiene copolymer rubber, chloroprene rubber and halogenated butyl rubber.

Also preferably, the rubber composition further comprising y) one or more fillers. Preferably, the filler is selected from the group consisting of silica and carbon black. More preferably, the rubber composition comprises y) both silica and carbon black.

Typically, the rubber composition comprises an amount of filler component y) of 10 to 150 parts by mass relative to 100 parts by mass of the rubber component x) (phr), preferably the amount of component y) is 20 to 140 phr, more preferably the amount of component y) is 50 to 130 phr.

According to the seventh aspect, the invention relates to a tire component comprising the rubber composition of the sixth aspect. Preferably, the tire component is a tire tread.

According to the eighth aspect, the invention relates to a tire comprising the tire component of the seventh aspect.

### Description of polymer preparation

The preparation of the polymer system of the present invention typically and preferably comprises the following steps:

### Step 1 - Polymer synthesis

Polymer is prepared by forming a solution of one or more anionically polymerizable monomers in a solvent and initiating the polymerization of the monomers with the alkyl lithium initiator.

Copolymers preferably comprise
- from 99.8 to 30 percent by weight of diene-derived units,
- from 0 to 60 percent by weight of monovinyl aromatic hydrocarbon-derived units, and
- 0.5 to 2% percent by weight of units derived from the styrene derivative of the present invention.

Copolymers described according to the present invention typically have a 1,2-microstructure content in a range of from 5% to 100%, preferably of from 10% to 90% and most preferably of from 20% to 80%, based upon the diene content.

To obtain a random structure of copolymer and/or to increase the vinyl structure content, especially when styrene and butadiene monomers are used, a modifier may optionally be added to the polymerization with the usage between 0 to 90 or more mol equivalents per equivalent of lithium. The specific amount depends upon the type of modifier and the amount of vinyl desired, the level of styrene employed, and the temperature of the polymerization.

To start the polymerization, solvent and all monomers are charged to the reactor, which is followed by addition of modifier. After stabilization of the temperature range, initiator should be added. The reaction mixture should be agitated. The reaction should be carried out under anhydrous, anaerobic conditions. The reaction can be carried out for about 0.1 to 24 hours, depending on the temperature, molecular weight of desired product, and modifier used. Resulting (co)polymer is further subjected to steps 2 and 3, as set out below.

### Step 2 - Coupling

Coupling is typically done by addition of a selected coupling agent to the (co)polymer system resulting from Step 1, at conditions similar or close to the polymerization conditions described earlier.

It should be noted that, according to the present invention, the fraction of (co)polymer chains being coupled will typically vary from 15 to 75%, which is achieved by controlled addition of coupling agent, in the amount required to bond the desired portion of the (co)polymer chains. The exact amount of coupling agent is calculated based on its theoretical functionality and required coupling fraction.

Functionality of the coupling agent should be understood as the theoretical number of living chain ends which may undergo a reaction with the specific coupling agent.

### Step 3 - Functionalization

In this step, the functionalizing agent responsible for formation of strong interactions with fillers, such as silica or carbon black, is added to the (co)polymer solution, thus providing the final (co)polymer.

Any compound containing at least one atom selected from the group consisting of sulfur, oxygen, silicon and nitrogen and reactive toward living polymer chain can be used as a functional terminating compound.

The amount of functionalization agent used depends on its functionality (i.e. number of groups being able to form bonds with living polymer chains) and the amount of living polymer chains. It is well known to one skilled in the art that in case of functionalization agents bearing functionality higher than 1, exactly controlled amount of coupling agent used allows to further influence the (co)polymer properties and i.e. introduce additional coupling. A preferred amount of functionalizing agent is in a range of from 0.01 to 10 mol per 1 mol of living chain ends, more preferred is to use from 0.1 mol to 1 mol per 1 mol of living chain ends, to obtain the desired Mooney viscosity.

After addition of functionalization agent, antioxidants, and/or alcohols for stopping polymerization reaction, may be added if necessary.

The present invention is described specifically below by way of examples. However, the present invention is in no way restricted to these examples.

### Examples

In order to provide more details about the synthesis and properties of elastomers prepared according to the present invention, functionalized styrene-butadiene copolymers with exactly controlled micro- and macrostructure and with functional groups of various type are described in Examples 2-4 and compared with non-functionalized copolymer described in Example 1. "Parts per hundred rubber", "phr", and "%" are based on mass unless otherwise specified. The measurement methods and evaluation methods of properties are shown below.

### Polymerization

### Inertization step:

Cyclohexane (1,200 g) was added to a nitrogen-purged two liter reactor and treated with 1 gram of 1.6 M n-butyl lithium solution in cyclohexane. The solution was heated to 70°C and vigorously stirred for 10 minutes to perform cleaning and inertization of the reactor. After that, solvent was removed via a drain valve and nitrogen was purged again.

### Synthesis of vinylbenzylamine initiator precursor

1-(4-ethenylbenzyl)pyrrolidine (EPP) was synthesized according to the procedure described in US 5,015,551 A.

### Example 1 (reference sample)

Cyclohexane (820 g) was added to the inerted two liter reactor, followed by addition of styrene (31 g) and of 1,3-butadiene (117 g). Inhibitor from styrene and 1,3 butadiene was removed. Next, tetramethylethylenediamine (TMEDA, 2.21 mmol) was added, to provide random incorporation of styrene monomer and to increase the vinyl content of the butadiene units. The solution inside the reactor was heated to 60°C and continuously stirred during the whole process. When the desired temperature was reached, n-butyl lithium (0.045 mmol) was added to perform quenching of residual impurities. Then, n-butyl lithium (0.845 mmol) was added to initiate the polymerization process. The reaction was carried out as a isothermic process for 60 minutes. After this time, silicon tetrachloride (5.25 × 10⁻⁵ mol) was added to the polymer solution as a coupling agent. Coupling was performed for 5 minutes. The reaction solution was terminated using nitrogen-purged isopropyl alcohol (1 mmol) and rapidly stabilized by addition of 2-methyl-4,6-bis(octylsulfanylmethyl)phenol (at 1.0 phr polymer). The polymer solution was treated with isopropanol, and precipitation of polymer occurred. The final product was dried overnight in a vacuum oven.

### Example 2

Cyclohexane (820 g) was added to the inerted two liter reactor, followed by addition of styrene (31 g), 1-[{*N*,*N*-bis-(trimethylsilylamine)}(dimethylsilyl)]-2-{(4-vinylphenyl)-dimethylsilyl}ethane (3.4 g) and 1,3-butadiene (117 g). Inhibitor from styrene and 1,3-butadiene was removed. Next, tetramethylethylenediamine (TMEDA, 2.21 mmol) was added, to provide random incorporation of styrene monomer and to increase the vinyl content of the butadiene units. The solution inside the reactor was heated to 60°C and continuously stirred during the whole process. When the desired temperature was reached, n-butyl lithium (0.045 mmol) was added to perform quenching of residual impurities. Then, n-butyl lithium (0.84 mmol) was added to initiate the polymerization process. The reaction was carried out as a isothermic process for 60 minutes. After this time, silicon tetrachloride (6.30 × 10⁻⁵ mol) was added to the polymer solution as a coupling agent. Coupling was performed for 5 minutes. The reaction solution was terminated using of nitrogen-purged isopropyl alcohol (1 mmol) and rapidly stabilized by addition of 2-methyl-4,6-bis(octylsulfanylmethyl)phenol (at 1.0 phr polymer). The polymer solution was treated with isopropanol, and precipitation of polymer occurred. The final product was dried overnight in a vacuum oven.

### Example 3

Cyclohexane (820 g) was added to the inerted two liter reactor, followed by addition of styrene (31 g), 1-[{*N,N-*bis(trimethylsilylamine)} (dimethylsilyl)]-2-{(4-vinylphenyl)-dimethylsilyl}ethane (3.4 g) and 1,3-butadiene (117 g). Inhibitor from styrene and 1,3-butadiene was removed. Next, tetramethylethylenediamine (TMEDA, 2.21 mmol) was added as a styrene randomizer and to increase the vinyl content of the butadiene monomer-contributed units. The solution inside the reactor was heated to 60°C and continuously stirred during the whole process. When the temperature was reached, n-butyl lithium (0.045 mmol) was added to the reactor, to perform quenching of residual impurities. The reaction was carried out as a isothermic process for 60 minutes. Functionalization was performed using an alkoxysilane derivative, and (3-glycidyl-oxypropyl)trimethoxysilane (GPTMS) (1.26 mmol) was added to the polymer solution. Functionalization was carried out for 20 minutes at 60°C. The reaction solution was terminated using nitrogen-purged isopropyl alcohol (1 mmol)and rapidly stabilized by addition of 2-methyl-4,6-bis(octylsulfanylmethyl)-phenol (at 1.0 phr polymer). The polymer solution was treated with isopropanol, and precipitation of polymer occurred. The final product was dried overnight in a vacuum oven.

### Example 4 (continuous polymerization)

The butadiene-styrene copolymer was prepared in a continuous two-reactor chain of 600-liter capacity each, where each reactor was equipped with a triple paddle stirrer. The agitation speed was 30-50 rpm and filling factor at the level of 50%. Into the first reactor hexane, styrene, butadiene and 1-[{*N,N-*bis(trimethylosilylamine)} (dimethylosilyl)]-2-{(4-vinylphenyl)dimethylosilyl}ethane (as a solution in hexane) were dosed, with flow rates of 200.00 kg/h, 8.00 kg/h, 35.00 kg/h, and 0.32 kg/h, respectively. n-Butyl lithium flow rate (n-BuLi, as a solution in hexane) was 0.08 kg/h, and 1-(4-ethenyl-benzyl)pyrrolidine (as a solution in hexane) flow rate was 0.30 kg/h. Streams of n-BuLi and EBP were mixed together in the pipe, before entering the reactor, and the contact time was about 5 min. The temperature in the reactors was kept constant at 80°C. To obtain ω-functionalised rubber, (3-glycidyl-oxypropyl)trimethoxysilane (GPTMS) was added at the reactor outlet, at the entry of a dynamic mixer fitted with a stirrer controlled at a rotational speed of 500 rpm, in a GPTMS/active n-BuLi ratio = 1.30. The functionalization reaction was performed at 80°C. After 5 minutes, 2-methyl-4,6-bis(octyl-sulfanylmethyl)phenol (1.0 phr) was added as an antioxidant. The polymers were recovered by a conventional recovery operation using steam stripping of the solvent, were dried in a screw-type dewatering system at 70°C, and then dried for 40 minutes in the dryer.

### Characterization

### Vinyl content (%)

Determined by 600 MHz ¹H-NMR, based on BS ISO 21561:2005 *Bound styrene content* (%)
Determined by 600 MHz ¹H-NMR, based on BS ISO 21561:2005 *Molecular weight determination*

Gel permeation chromatography was performed via PSS Polymer Standards Service multiple columns (with guard column) using THF as the eluent and for sample preparation. Multi-angle laser light scattering measurements were carried out using a Wyatt Technologies Dawn Heleos II light scattering detector, DAD (PDA) Agilent 1260 Infinity UV-VIS detector and Agilent 1260 Infinity refractive index detector.

### Glass transition temperature (°C)

Determined based on PN-EN ISO 11357-1:2009

### Mooney viscosity (ML 1+4, 100°C)

Determined based on ASTM D 1646-07, using an L rotor under the conditions of preheating = 1 minute, rotor operating time = 4 minutes, and temperature = 100°C

### Vulcanization characteristics

Determined based on ASTM D6204, using RPA 2000 Alpha Technologies rubber processing analyzer, operating time = 30 minutes, and temperature = 170°C

### Evaluation and measurement of properties of rubber composition

A vulcanized rubber composition was prepared using a polymer obtained in each of Examples, and was measured for the following test parameters
i) *Tire predictors (tan δ* at *60°C, tan δ at 0°C, tan δ at -10°C, J" at 30°C)*
   A vulcanized rubber composition was used as a test sample and measured for this parameter, using a dynamic mechanical analyzer (DMA 450+ MetraviB) in shear mode under the conditions of tensile strain = 2%, frequency = 10 Hz, in the temperature range of from -70 to 70°C, with a heating rate of 2.5 K/min.
ii) *Rebound resilience*
   Determined based on ISO 4662

Table 1 shows the characterization results for the four samples synthesized for this study.

**Table 1**

| **Example** | **Mₙ [g/mol]** | **M_{w} [g/mol]** | **M_{w}/Mₙ** | **Vinyl content [%]¹** | **Styrene content [%]** | **Mooney** | **Tg [°C]** |
|---|---|---|---|---|---|---|---|
| **1 (ref.)** | 223,000 | 323,000 | 1.44 | 61.90 | 20.45 | 60.4 | -26.8 |
| **2** | 222,000 | 397,000 | 1.78 | 61.90 | 21.20 | 56.2 | -25.4 |
| **3** | 221,000 | 316,000 | 1.43 | 61.70 | 21.15 | 59.7 | -25.4 |
| **4** | 246,000 | 387,000 | 1.57 | 58.57 | 21.65 | 66.7 | -27.0 |

| | | | | | | | |
|---|---|---|---|---|---|---|---|
| ¹ Based on 1,3-butadiene content | | | | | | | |

### Compounding

Using each of the rubbers obtained in Examples 2 and 3 and Reference sample 1, compounding was made according to the "compounding recipe of rubber composition" shown in Table 2. The compounds were mixed in two steps in Banbury type of internal mixers (350E Brabender GmbH & Co. KG) : step 1 in the white mixing line, step 2 in the black one. The conditioning time between steps 1 and 2 was 24 hours. In the third step, vulcanizating agents were mixed into the compound on a two-roll mill at 50°C. The conditioning time between steps 2 and 3 was 4 hours. Then, each unvulcanized rubber composition was vulcanized at 170°C, for T_{95+1.5} minutes (based on RPA results), to obtain rubber compositions (vulcanized compositions). Each vulcanized rubber composition was evaluated and measured for the above-mentioned tensile properties, tire predictors and rebound resilience. The results are shown in Table 3.

**Table 2**

| **Component** | **phr** |
|---|---|
| **SBR** | 75 |
| **Polybutadiene rubber¹** | 25 |
| **Silica²** | 80 |
| **Carbon Black³** | 10 |
| **Stearic acid** | 2 |
| **Zinc oxide** | 3 |
| **Oil extender⁴** | 37.5 |
| **6PPD⁵** | 2 |
| **Bis[3-(triethoxysilyl)propyl]tetrasulfide⁶** | 6.4 |
| **N-tert-butyl-2-benzothiazole sulfenamide⁷** | 1.7 |
| **1,3-Diphenylguanidine⁸** | 2 |
| **Sulphur** | 1.5 |

| | |
|---|---|
| ¹ Synteca 44, a product of Synthos ² Zeosil 1165MP, a product of Solvay ³ ISAF-N234, a product of Cabot corporation ⁴ VivaTec 500, a product of Klaus Dahleke KG ⁵ VULKANOX 4020/LG, a product of Lanxess ⁶ Si 69, a product of Evonik ⁷ LUVOMAXX TBBS, a product of Lehmann & Voss & Co. KG ⁸ DENAX, a product of Draslovka a.s. | |

**Table 3**

| **Example** | **Rebound resilience, [%]** | **Tyre predictors** | | | |
|---|---|---|---|---|---|
| | | **tan δ (60°C)¹** | **tan δ, (0°C)²** | **tan δ, (-10°C)³** | **J" (30°C)⁴, [Pa⁻¹]** |
| **1 (ref.)** | 32.68 | 0.1716 | 0.5108 | 0.6540 | 4.44·10⁻⁸ |
| **2** | 35.68 | 0.1418 | 0.6564 | 0.7547 | 5.66·10⁻⁸ |
| **3** | 37.92 | 0.1310 | 0.6761 | 0.7958 | 5.78·10⁻⁸ |
| **4** | 37.96 | 0.1640 | 0.6049 | 0.8048 | 7.08·10⁻⁸ |

| | | | | | |
|---|---|---|---|---|---|
| ¹ Rolling resistance (lower is better) ² Wet traction (higher is better) ³ Ice traction (higher is better) ⁴ Dry traction (higher is better) | | | | | |

It is apparent from these results that in a silica mix, as judged based on the properties in the vulcanized state, SSBR 3 according to the invention imparts to the corresponding rubber composition 3 reinforcement properties which are superior to those obtained with the control SSBR 1 and with the other SBR 2 according to the invention. Moreover the data in Table 3 shows that SSBR 4 obtained in continuous polymerization has better reinforcement properties compared to control SSBR 1.

Furthermore, the tyre predictors of rubber composition 3 according to the invention are improved relative to those of the control rubber composition 1 and of the rubber compositions 2 and 4 according to the invention. Moreover, said tyre predictors are improved for rubber composition 2 according to the invention relative to the control rubber composition 1. Furthermore tyre predictors are improved for rubber composition 4 according to the invention relative to the control rubber composition 1 additionally ice traction and dry traction properties are improved relative to those of the rubber composition 1, 2 and 3.

While certain representative embodiments and details have been shown for the purpose of illustrating the subject invention, it will be apparent to those skilled in this art that various changes and modifications can be made therein without departing from the scope of the subject invention, which scope is defined by the following claims.

## Claims

1. Use of a styrene derivative of formula (I) 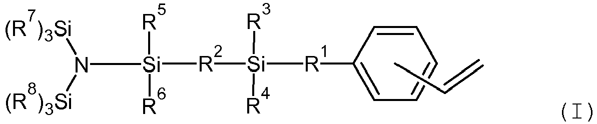
wherein R¹ and R² can be the same or different and represent a member selected from the group consisting of:
a) a single bond;
b) -(CH₂)ₙ-, wherein n represents an integer from 1 to 12;
c) - (CH₂CH₂Y)ₙ-, wherein n represents an integer from 1 to 12, and Y can independently be oxygen or sulfur;
d) -CH₂-(CH₂CH₂Y)ₙ-CH₂-, wherein n represents an integer from 1 to 12, and Y can independently be oxygen or sulfur;
e) -(CH₂CH₂NR)ₙ-, wherein n represents an integer from 1 to 12, and R can independently represent an alkyl group containing from 1 to 10 carbon atoms, or an aryl or aralkyl group containing from 6 to 10 carbon atoms;
f) -CH₂-(CH₂CH₂NR)ₙ-CH₂-, wherein n represents an integer from 1 to 12, and R can independently represent an alkyl group containing from 1 to 10 carbon atoms, or an aryl or aralkyl group containing from 6 to 10 carbon atoms;
g) -(CH₂SiR₂)ₙ-, wherein n represents an integer from 1 to 12, and R can independently represent an alkyl group containing from 1 to 10 carbon atoms, or an aryl or aralkyl group containing from 6 to 10 carbon atoms;
h) -CH₂-(CH₂SiR₂)ₙ-CH₂-, wherein n represents an integer from 1 to 12, and R can independently represent an alkyl group containing from 1 to 10 carbon atoms, or an aryl or aralkyl group containing from 6 to 10 carbon atoms;
i) -(OSiR₂)ₙ-, wherein n represents an integer from 1 to 12, and R can independently represent an alkyl group containing from 1 to 10 carbon atoms, or an aryl or aralkyl group containing from 6 to 10 carbon atoms; and
j) -CH₂- (OSiR₂)ₙ-CH₂-, wherein n represents an integer from 1 to 12, and R can independently represent an alkyl group containing from 1 to 10 carbon atoms, or an aryl or aralkyl group containing from 6 to 10 carbon atoms;
wherein R³, R⁴, R⁵, and R⁶ can be the same or different and represent an alkyl group containing from 1 to 10 carbon atoms, or an aryl or aralkyl group containing from 6 to 10 carbon atoms; and
R⁷ and R⁸ can be the same or different, and each R⁷ and R⁸ independently represents an alkyl group containing from 1 to 10 carbon atoms, or an aryl or aralkyl group containing from 6 to 10 carbon atoms,
in the production of an elastomeric copolymer.

2. The use of claim 1, wherein the copolymer comprises, in addition to units derived from the styrene derivative of formula (I), units derived from one or more diene monomer(s) and optionally one or more vinyl aromatic monomer(s),
preferably wherein the diene monomer is a conjugated diene monomer.

3. A method for producing an elastomeric copolymer comprising subjecting
- one or more diene monomer(s),
- optionally one or more vinyl aromatic monomer(s) and
- one or more styrene derivative(s) of formula (I) 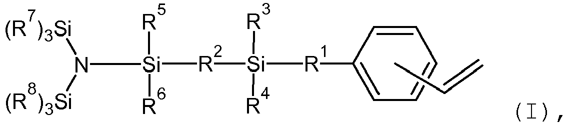
wherein R¹ and R² can be the same or different and represent a member selected from the group consisting of:
a) a single bond;
b) - (CH₂)ₙ-, wherein n represents an integer from 1 to 12;
c) - (CH₂CH₂Y)ₙ-, wherein n represents an integer from 1 to 12, and Y can independently be oxygen or sulfur;
d) -CH₂-(CH₂CH₂Y)ₙ-CH₂-, wherein n represents an integer from 1 to 12, and Y can independently be oxygen or sulfur;
e) - (CH₂CH₂NR)ₙ-, wherein n represents an integer from 1 to 12, and R can independently represent an alkyl group containing from 1 to 10 carbon atoms, or an aryl or aralkyl group containing from 6 to 10 carbon atoms;
f) -CH₂-(CH₂CH₂NR)ₙ-CH₂-, wherein n represents an integer from 1 to 12, and R can independently represent an alkyl group containing from 1 to about 10 carbon atoms, or an aryl or aralkyl group containing from 6 to 10 carbon atoms;
g) -(CH₂SiR₂)ₙ-, wherein n represents an integer from 1 to 12, and R can independently represent an alkyl group containing from 1 to about 10 carbon atoms, or an aryl or aralkyl group containing from 6 to 10 carbon atoms;
h) -CH₂-(CH₂SiR₂)ₙ-CH₂-, wherein n represents an integer from 1 to 12, and R can independently represent an alkyl group containing from 1 to 10 carbon atoms, or an aryl or aralkyl group containing from 6 to 10 carbon atoms;
i) -(OSiR₂)ₙ-, wherein n represents an integer from 1 to 12, and R can independently represent an alkyl group containing from 1 to 10 carbon atoms, or an aryl or aralkyl group containing from 6 to 10 carbon atoms; and
j) -CH₂-(OSiR₂)ₙ-CH₂-, wherein n represents an integer from 1 to 12, and R can independently represent an alkyl group containing from 1 to about 10 carbon atoms, or an aryl or aralkyl group containing from 6 to 10 carbon atoms;
wherein R³, R⁴, R⁵, and R⁶ can be the same or different and represent an alkyl group containing from 1 to 10 carbon atoms, or an aryl or aralkyl group containing from 6 to 10 carbon atoms; and
R⁷ and R⁸ can be the same or different, and each R⁷ and R⁸ independently represents an alkyl group containing from 1 to 10 carbon atoms, or an aryl or aralkyl group containing from 6 to 10 carbon atoms,
to anionic polymerization conditions,
preferably wherein the polymerization is batch-wise or continuous.

4. An elastomeric copolymer comprising repeat units that are derived from
A) 20 wt.% to 99.95 wt.%, by weight of the copolymer, of one or more diene monomer(s);
B) 0 wt.% to 60 wt.%, by weight of the copolymer, of one or more vinyl aromatic monomer(s); and
C) 0.05 wt.% to 50 wt.%, by weight of the copolymer, of one or more styrene derivative(s) of formula (I) 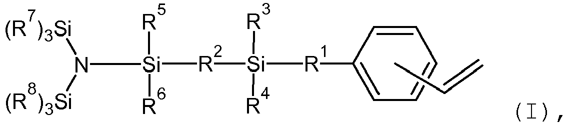
wherein R¹ and R² can be the same or different and represent a member selected from the group consisting of:
a) a single bond;
b) -(CH₂)ₙ-, wherein n represents an integer from 1 to 12;
c) - (CH₂CH₂Y)ₙ-, wherein n represents an integer from 1 to 12, and Y can independently be oxygen or sulfur;
d) -CH₂-(CH₂CH₂Y)ₙ-CH₂-, wherein n represents an integer from 1 to 12, and Y can independently be oxygen or sulfur;
e) -(CH₂CH₂NR)ₙ-, wherein n represents an integer from 1 to 12, and R can independently represent an alkyl group containing from 1 to 10 carbon atoms, or an aryl or aralkyl group containing from 6 to 10 carbon atoms;
f) -CH₂-(CH₂CH₂NR)ₙ-CH₂-, wherein n represents an integer from 1 to 12, and R can independently represent an alkyl group containing from 1 to about 10 carbon atoms, or an aryl or aralkyl group containing from 6 to 10 carbon atoms;
g) -(CH₂SiR₂)ₙ-, wherein n represents an integer from 1 to 12, and R can independently represent an alkyl group containing from 1 to about 10 carbon atoms, or an aryl or aralkyl group containing from 6 to 10 carbon atoms;
h) -CH₂-(CH₂SiR₂)ₙ-CH₂-, wherein n represents an integer from 1 to 12, and R can independently represent an alkyl group containing from 1 to 10 carbon atoms, or an aryl or aralkyl group containing from 6 to 10 carbon atoms;
i) -(OSiR₂)ₙ-, wherein n represents an integer from 1 to 12, and R can independently represent an alkyl group containing from 1 to 10 carbon atoms, or an aryl or aralkyl group containing from 6 to 10 carbon atoms; and
j) -CH₂-(OSiR₂)ₙ-CH₂-, wherein n represents an integer from 1 to 12, and R can independently represent an alkyl group containing from 1 to about 10 carbon atoms, or an aryl or aralkyl group containing from 6 to 10 carbon atoms;
wherein R³, R⁴, R⁵, and R⁶ can be the same or different and represent an alkyl group containing from 1 to 10 carbon atoms, or an aryl or aralkyl group containing from 6 to 10 carbon atoms; and
R⁷ and R⁸ can be the same or different, and each R⁷ and R⁸ independently represents an alkyl group containing from 1 to 10 carbon atoms, or an aryl or aralkyl group containing from 6 to 10 carbon atoms.

5. The elastomeric copolymer of claim 4 wherein the diene monomer is a conjugated diene monomer,
preferably wherein the conjugated diene monomer is selected from 1,3-butadiene, isoprene, 1,3-pentadiene, 2,3-dimethyl-1,3-butadiene, 2-methyl-1,3-pentadiene, 2,3-dimethyl-1,3-pentadiene, 2-phenyl-1,3-butadiene, and 4,5-diethyl-1,3-octadiene,
more preferably wherein the conjugated diene monomer is selected from 1,3-butadiene and isoprene,
in particular wherein the conjugated diene monomer is 1,3-butadiene.

6. The elastomeric copolymer of claim 5, wherein the amount of A) conjugated diene monomer(s) is 40 to 90 wt.%, by weight of the copolymer, preferably 50 to 90 wt.%, by weight of the copolymer, in particular 60 to 90 wt.%, by weight of the copolymer.

7. The elastomeric copolymer of any one of claims 4 to 6 wherein the vinyl aromatic monomer is selected from styrene, 1-vinylnaphthalene, 3-methylstyrene, 3,5-diethylstyrene, 4-propylstyrene, 2,4,6-trimethylstyrene, 4-dodecylstyrene, 3-methyl-5-n-hexylstyrene, 4-phenylstyrene, 2-ethyl-4-benzyl-styrene, 3,5-diphenylstyrene, 2,3,4,5-tetraethylstyrene, 3-ethyl-1-vinylnaphthalene, 6-isopropyl-1-vinylnaphthalene, 6-cyclohexyl-1-vinylnaphthalene, 7-dodecyl-2-vinylnaphthalene, and α-methylstyrene,
preferably wherein the vinyl aromatic monomer is selected from styrene, 3-methylstyrene and α-methylstyrene,
in particular wherein the vinyl aromatic monomer is styrene.

8. The elastomeric copolymer of any one of claims 4 to 7 wherein the amount of B) vinyl aromatic monomer(s) is 10 to 60 wt.%, by weight of the copolymer, preferably 10 to 50 wt.%, by weight of the copolymer, in particular 20 to 50 wt.%, by weight of the copolymer.

9. The elastomeric copolymer of any one of claims 4 to 8 wherein R² of the styrene derivative of formula (I) is (CH₂)₂;
preferably wherein the styrene derivative is selected from any one of formulae (1), (2), (3), (4), (5), and (6) 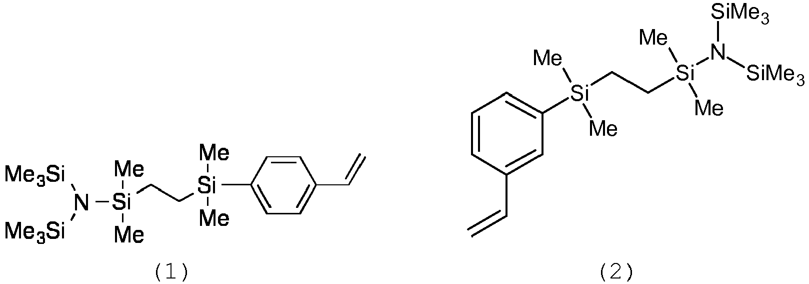 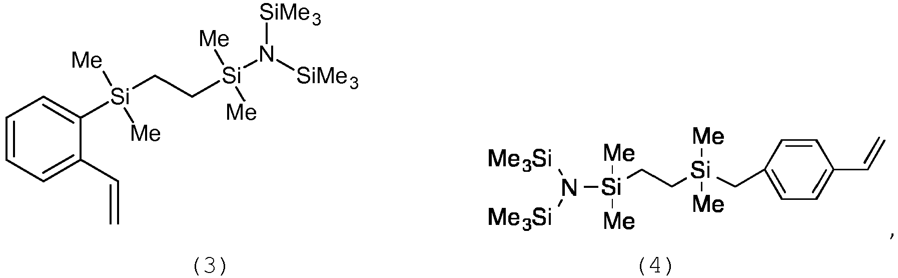 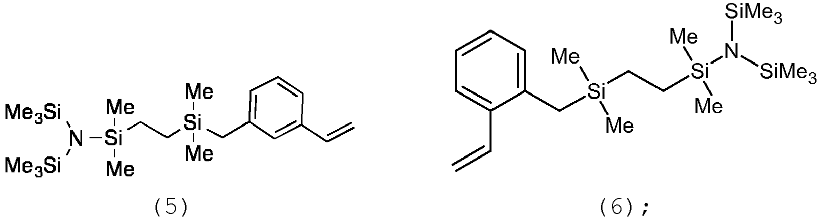 more preferably wherein the styrene derivative of formula (I) is selected from any one of formulae (1), (2), (4), and (5);
most preferably wherein the styrene derivative of formula (I) is selected from any one of formulae (1), (4), and (5).

10. The elastomeric copolymer of any one of claims 4 to 9 wherein the amount of C) is 0.05 to 50 wt.%, by weight of the copolymer, preferably 0.2 to 10 wt.%, by weight of the copolymer, in particular 0.5 to 2 wt.%, by weight of the copolymer.

11. The elastomeric copolymer of any one of claims 4 to 10, wherein the copolymer comprises units having a star structure and being produced by the reaction of metal-terminated living linear copolymer with one or more coupling agents.

12. The elastomeric copolymer of claim 11, wherein the coupling agent is a tin halide coupling agent,
preferably wherein the tin halide coupling agent is tin tetrachloride.

13. The copolymer of claim 11, wherein the coupling agent is a silicon halide coupling agent,
preferably wherein the silicon halide coupling agent is selected from silicon tetrachloride, silicon tetrabromide, silicon tetrafluoride, silicon tetraiodide, hexachlorodisilane, hexabromodisilane, hexafluorodisilane, hexaiododisilane, octachlorotrisilane, octabromotrisilane, octafluorotrisilane, octaiodotrisilane, hexachlorodisiloxane, 2,2,4,4,6,6-hexachloro-2,4,6-trisilaheptane,1,2,3,4,5,6-hexakis[2-(methyldichlorosilyl)ethyl]benzene, and alkyl silicon halides of general formula (III)
R⁹ₙ-Si-X₄₋ₙ (III),
wherein R⁹ is a monovalent aliphatic hydrocarbon group having 1 to 20 carbon atoms or a monovalent aromatic hydrocarbon group having 6 to 18 carbon atoms; n is an integer of 0 to 2; and X can be a chlorine, bromine, fluorine or iodine atom.

14. The elastomeric copolymer of any of claims 11 to 13, wherein the fraction of units having star structure is between 15 and 75%, by weight of the copolymer.

15. The elastomeric copolymer of any of claims 4 to 14, wherein one or more moieties reactive toward silica surface are present,
preferably wherein the moiety is derived from units of general formula (IV) or (V)
R¹⁰ₙ-Si- (OR¹¹)₄₋ₙ (IV), 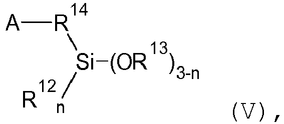
wherein, in general formula (IV), R¹⁰ and R¹¹ are each independently a monovalent aliphatic hydrocarbon group having 1 to 20 carbon atoms or a monovalent aromatic hydrocarbon group having 6 to 18 carbon atoms; n is an integer of 0 to 2; when there are a plurality of OR¹¹s, the plurality of OR¹¹s may be the same or different from each other; and there is no active proton in the molecule, and
wherein, in general formula (V), A is a monovalent group having at least one functional group selected from the group consisting of epoxy, thioepoxy, isocyanate, imine, cyclic tertiary amine, acyclic tertiary amine, pyridine, silazane and disulfide; R¹⁴ is a single bond or a divalent hydrocarbon group; R¹² and R¹³ are each independently a monovalent aliphatic hydrocarbon group having 1 to 20 carbon atoms or a monovalent aromatic hydrocarbon group having 6 to 18 carbon atoms; b is an integer of 0 to 2; when there are a plurality of OR¹³s, the plurality of OR¹³s may be the same or different from each other; and there is no active proton in the molecule.

16. A method for preparing a rubber comprising vulcanizing the elastomeric copolymer according to any one of claims 4 to 15 in the presence of one or more vulcanizing agent(s).

17. A rubber as obtainable according to the method of claim 16.

18. A rubber composition comprising x) a rubber component comprising the rubber according to claim 17.

19. The rubber composition according to claim 18, further comprising y) one or more fillers,
preferably wherein the filler is selected from the group consisting of silica and carbon black,
preferably wherein the rubber composition comprises y) both silica and carbon black.

20. The rubber composition according to claim 19, wherein the amount of filler component y) is 10 to 150 parts by mass relative to 100 parts by mass of the rubber component x) (phr),
preferably wherein the amount of component y) is 20 to 140 phr,
more preferably wherein the amount of component y) is 30 to 130 phr.

21. The rubber composition according to any of claims 18 to 20 wherein the rubber component x) also comprises one or more further rubbery polymers.

22. The rubber composition according to claim 21, wherein the further rubbery polymer is selected from the group consisting of natural rubber, synthetic isoprene rubber, butadiene rubber, styrene-butadiene rubber, ethylene-α-olefin copolymer rubber, ethylene-α-olefin-diene copolymer rubber, acrylonitrile-butadiene copolymer rubber, chloroprene rubber and halogenated butyl rubber.

23. A tire component comprising the rubber composition of claim 22,
preferably wherein the tire component is a tire tread.

24. A tire comprising the tire component of claim 23.

## Patentansprüche

1. Verwendung eines Styrolderivats der Formel (I) 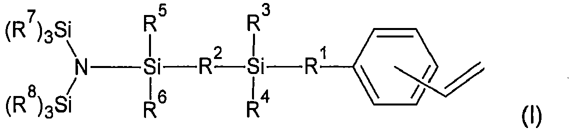
wobei R¹ und R² gleich oder verschieden sein können und ein Element darstellen, das ausgewählt ist aus der Gruppe bestehend aus:
a) einer Einfachbindung;
b) -(CH₂)ₙ-, wobei n eine Zahl von 1 bis 12 darstellt;
c) -(CH₂CH₂Y)ₙ-, wobei n eine Zahl von 1 bis 12 darstellt und Y unabhängig Sauerstoff oder Schwefel sein kann;
d) -CH₂-(CH₂CH₂Y)ₙ-CH₂-, wobei n eine Zahl von 1 bis 12 darstellt und Y unabhängig Sauerstoff oder Schwefel sein kann;
e) -(CH₂CH₂NR)ₙ-, wobei n eine Zahl von 1 bis 12 darstellt und R unabhängig eine Alkylgruppe mit 1 bis 10 Kohlenstoffatomen darstellt, oder eine Aryl- oder Aralkylgruppe mit 6 bis 10 Kohlenstoffatomen;
f) -CH₂-(CH₂CH₂NR)ₙ-CH₂-, wobei n eine Zahl von 1 bis 12 darstellt und R unabhängig eine Alkylgruppe mit 1 bis 10 Kohlenstoffatomen darstellt, oder eine Aryl- oder Aralkylgruppe mit 6 bis 10 Kohlenstoffatomen;
g) -(CH₂SiR₂)ₙ-, wobei n eine Zahl von 1 bis 12 darstellt und R unabhängig eine Alkylgruppe mit 1 bis 10 Kohlenstoffatomen darstellt, oder eine Aryl- oder Aralkylgruppe mit 6 bis 10 Kohlenstoffatomen;
h) -CH₂-(CH₂SiR₂),-CH₂-, wobei n eine Zahl von 1 bis 12 darstellt und R unabhängig eine Alkylgruppe mit 1 bis 10 Kohlenstoffatomen darstellt, oder eine Aryl- oder Aralkylgruppe mit 6 bis 10 Kohlenstoffatomen;
i) -(OSiR₂)ₙ-, wobei n eine Zahl von 1 bis 12 darstellt und R unabhängig eine Alkylgruppe mit 1 bis 10 Kohlenstoffatomen darstellt, oder eine Aryl- oder Aralkylgruppe mit 6 bis 10 Kohlenstoffatomen; und
j) -CH₂-(OSiR₂)ₙ-CH₂-, wobei n eine Zahl von 1 bis 12 darstellt und R unabhängig eine Alkylgruppe mit 1 bis 10 Kohlenstoffatomen darstellt, oder eine Aryl- oder Aralkylgruppe mit 6 bis 10 Kohlenstoffatomen;
wobei R³, R⁴, R⁵ und R⁶ gleich oder verschieden sein können und eine Alkylgruppe mit 1 bis 10 Kohlenstoffen darstellen, oder eine Aryl- oder Aralkylgruppe mit 6 bis 10 Kohlenstoffatomen; und
R⁷ und R⁸ gleich oder verschieden sein können und jedes R⁷ und R⁸ unabhängig eine Alkylgruppe mit 1 bis 10 Kohlenstoffatomen darstellt, oder eine Aryl- oder Aralkylgruppe mit 6 bis 10 Kohlenstoffatomen,
bei der Herstellung eines elastomeren Copolymers.

2. Verwendung nach Anspruch 1, wobei das Copolymer umfasst, zusätzlich zu Einheiten, die von dem Styrolderivat der Formel (I) abgeleitet sind, Einheiten, die von einem oder mehreren Dienmonomer(en) und gegebenenfalls einem oder mehreren vinylaromatischem(n) Monomer(en) abgeleitet sind,
vorzugsweise wobei das Dienmonomer ein konjugiertes Dienmonomer ist.

3. Verfahren zur Herstellung eines elastomeren Copolymers, bei dem
- ein oder mehrere Dienmonomer(e),
- gegebenenfalls ein oder mehrere vinylaromatische Monomere und
- ein oder mehrere Styrolderivat(e) der Formel (I) 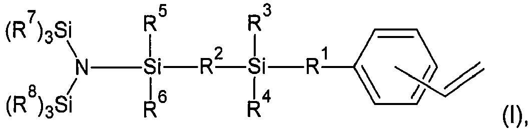
wobei R¹ und R² gleich oder verschieden sein können und ein Element darstellen, das ausgewählt ist aus der Gruppe bestehend aus:
a) einer Einfachbindung;
b) -(CH₂)ₙ-, wobei n eine Zahl von 1 bis 12 darstellt;
c) -(CH₂CH₂Y)ₙ-, wobei n eine Zahl von 1 bis 12 darstellt und Y unabhängig Sauerstoff oder Schwefel sein kann;
d) -CH₂-(CH₂CH₂Y)ₙ-CH₂-, wobei n eine Zahl von 1 bis 12 darstellt und Y unabhängig Sauerstoff oder Schwefel sein kann;
e) -(CH₂CH₂NR)ₙ-, wobei n eine Zahl von 1 bis 12 darstellt und R unabhängig eine Alkylgruppe mit 1 bis 10 Kohlenstoffatomen darstellt, oder eine Aryl- oder Aralkylgruppe mit 6 bis 10 Kohlenstoffatomen;
f) -CH₂-(CH₂CH₂NR)ₙ-CH₂-, wobei n eine Zahl von 1 bis 12 darstellt und R unabhängig eine Alkylgruppe mit 1 bis 10 Kohlenstoffatomen darstellt, oder eine Aryl- oder Aralkylgruppe mit 6 bis 10 Kohlenstoffatomen;
g) -(CH₂SiR₂)ₙ-, wobei n eine Zahl von 1 bis 12 darstellt und R unabhängig eine Alkylgruppe mit 1 bis 10 Kohlenstoffatomen darstellt, oder eine Aryl- oder Aralkylgruppe mit 6 bis 10 Kohlenstoffatomen;
h) -CH₂-(CH₂SiR₂)ₙ-CH₂-, wobei n eine Zahl von 1 bis 12 darstellt und R unabhängig eine Alkylgruppe mit 1 bis 10 Kohlenstoffatomen darstellt, oder eine Aryl- oder Aralkylgruppe mit 6 bis 10 Kohlenstoffatomen;
i) -(OSiR₂)ₙ-, wobei n eine Zahl von 1 bis 12 darstellt und R unabhängig eine Alkylgruppe mit 1 bis 10 Kohlenstoffatomen darstellt, oder eine Aryl- oder Aralkylgruppe mit 6 bis 10 Kohlenstoffatomen; und
j) -CH₂-(OSiR₂)ₙ-CH₂-, wobei n eine Zahl von 1 bis 12 darstellt und R unabhängig eine Alkylgruppe mit 1 bis 10 Kohlenstoffatomen darstellt, oder eine Aryl- oder Aralkylgruppe mit 6 bis 10 Kohlenstoffatomen;
wobei R³, R⁴, R⁵ und R⁶ gleich oder verschieden sein können und eine Alkylgruppe mit 1 bis 10 Kohlenstoffen darstellen, oder eine Aryl- oder Aralkylgruppe mit 6 bis 10 Kohlenstoffatomen; und
R⁷ und R⁸ gleich oder verschieden sein können und jedes R⁷ und R⁸ unabhängig eine Alkylgruppe mit 1 bis 10 Kohlenstoffatomen darstellt, oder eine Aryl- oder Aralkylgruppe mit 6 bis 10 Kohlenstoffatomen,
anionischen Polymerisationsbedingungen ausgesetzt werden,
vorzugsweise wobei die Polymerisation chargenweise oder kontinuierlich ist.

4. Elastomeres Copolymer, das sich wiederholende Einheiten aufweist, die abgeleitet sind von
A) 20 Gew.-% bis 99,95 Gew.-%, bezogen auf das Gewicht des Copolymers, von einem oder mehreren Dienmonomer(en);
B) 0 Gew.-% bis 60 Gew.-%, bezogen auf das Gewicht des Copolymers, von einem oder mehreren vinylaromatischen Monomer(en); und
C) 0,05 Gew.-% bis 50 Gew.-%, bezogen auf das Gewicht des Copolymers, von einem oder mehreren Styrolderivat(en) der Formel (I) 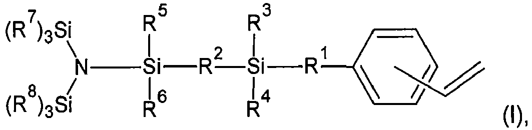
wobei R¹ und R² gleich oder verschieden sein können und ein Element darstellen, das ausgewählt ist aus der Gruppe bestehend aus:
a) einer Einfachbindung;
b) -(CH₂)ₙ-, wobei n eine Zahl von 1 bis 12 darstellt;
c) -(CH₂CH₂Y)ₙ-, wobei n eine Zahl von 1 bis 12 darstellt und Y unabhängig Sauerstoff oder Schwefel sein kann;
d) -CH₂-(CH₂CH₂Y)ₙ-CH₂-, wobei n eine Zahl von 1 bis 12 darstellt und Y unabhängig Sauerstoff oder Schwefel sein kann;
e) -(CH₂CH₂NR)ₙ-, wobei n eine Zahl von 1 bis 12 darstellt und R unabhängig eine Alkylgruppe mit 1 bis 10 Kohlenstoffatomen darstellt, oder eine Aryl- oder Aralkylgruppe mit 6 bis 10 Kohlenstoffatomen;
f) -CH₂-(CH₂CH₂NR)ₙ-CH₂-, wobei n eine Zahl von 1 bis 12 darstellt und R unabhängig eine Alkylgruppe mit 1 bis 10 Kohlenstoffatomen darstellt, oder eine Aryl- oder Aralkylgruppe mit 6 bis 10 Kohlenstoffatomen;
g) -(CH₂SiR₂)ₙ-, wobei n eine Zahl von 1 bis 12 darstellt und R unabhängig eine Alkylgruppe mit 1 bis 10 Kohlenstoffatomen darstellt, oder eine Aryl- oder Aralkylgruppe mit 6 bis 10 Kohlenstoffatomen;
h) -CH₂-(CH₂SiR₂)ₙ-CH₂-, wobei n eine Zahl von 1 bis 12 darstellt und R unabhängig eine Alkylgruppe mit 1 bis 10 Kohlenstoffatomen darstellt, oder eine Aryl- oder Aralkylgruppe mit 6 bis 10 Kohlenstoffatomen;
i) -(OSiR₂)ₙ-, wobei n eine Zahl von 1 bis 12 darstellt und R unabhängig eine Alkylgruppe mit 1 bis 10 Kohlenstoffatomen darstellt, oder eine Aryl- oder Aralkylgruppe mit 6 bis 10 Kohlenstoffatomen; und
j) -CH₂-(OSiR₂)ₙ-CH₂-, wobei n eine Zahl von 1 bis 12 darstellt und R unabhängig eine Alkylgruppe mit 1 bis 10 Kohlenstoffatomen darstellt, oder eine Aryl- oder Aralkylgruppe mit 6 bis 10 Kohlenstoffatomen;
wobei R³, R⁴, R⁵ und R⁶ gleich oder verschieden sein können und eine Alkylgruppe mit 1 bis 10 Kohlenstoffen darstellen, oder eine Aryl- oder Aralkylgruppe mit 6 bis 10 Kohlenstoffatomen; und
R⁷ und R⁸ gleich oder verschieden sein können und jedes R⁷ und R⁸ unabhängig eine Alkylgruppe mit 1 bis 10 Kohlenstoffatomen darstellt, oder eine Aryl- oder Aralkylgruppe mit 6 bis 10 Kohlenstoffatomen.

5. Elastomeres Copolymer nach Anspruch 4, wobei das Dienmonomer ein konjugiertes Dienmonomer ist,
vorzugsweise wobei das konjugierte Dienmonomer ausgewählt ist aus 1,3-Butadien, Isopren, 1,3-Pentadien, 2,3-Dimethyl-1,3-butadien, 2-Methyl-1,3-pentadien, 2,3-Dimethyl-1,3-pentadien, 2-Phenyl-1,3-butadien und 4,5-Diethyl-1,3-octadien,
bevorzugter wobei das konjugierte Dienmonomer ausgewählt ist aus 1,3-Butadien und Isopren,
insbesondere wobei das konjugierte Dienmonomer 1,3-Butadien ist.

6. Elastomeres Copolymer nach Anspruch 5, wobei die Menge von A) konjugiertem Dienmonomer (konjugierten Dienmonomeren) 40 bis 90 Gew.-% beträgt, bezogen auf das Gewicht des Copolymers, vorzugsweise 50 bis 90 Gew.-%, bezogen auf das Gewicht des Copolymers, insbesondere 60 bis 90 Gew.-%, bezogen auf das Gewicht des Copolymers.

7. Elastomeres Copolymer nach einem der Ansprüche 4 bis 6, wobei das vinylaromatische Monomer ausgewählt ist aus Styrol, 1-Vinylnaphthalen, 3-Methylstyrol, 3,5-Diethylstyrol, 4-Propylstyrol, 2,4,6-Trimethylstyrol, 4-Dodecylstyrol, 3-Methyl-5-n-hexylstyrol, 4-Phenylstyrol, 2-Ethyl-4-benzylstyrol, 3,5-Diphenylstyrol, 2,3,4,5-Tetraethylstyrol, 3-Ethyl-1-vinylnaphthalen, 6-Isopropyl-1-vinylnaphthalen, 6-Cyclohexyl-1-vinylnaphthalen, 7-Dodecyl-2-vinylnaphthalen und α-Methylstyrol,
vorzugsweise wobei das vinylaromatische Monomer ausgewählt ist aus Styrol, 3-Methylstyrol und α-Methylstyrol,
insbesondere wobei das vinylaromatische Monomer Styrol ist.

8. Elastomeres Copolymer nach einem der Ansprüche 4 bis 7, wobei die Menge von B) vinylaromatischem Monomer (vinylaromatischen Monomeren) 10 bis 60 Gew.-% beträgt, bezogen auf das Gewicht des Copolymers, vorzugsweise 10 bis 50 Gew.-%, bezogen auf das Gewicht des Copolymers, insbesondere 20 bis 50 Gew.-%, bezogen auf das Gewicht des Copolymers.

9. Elastomeres Copolymer nach einem der Ansprüche 4 bis 8, wobei R² des Styrolderivats der Formel (I) (CH₂)₂ ist;
vorzugsweise wobei das Styrolderivat ausgewählt ist aus irgendeiner der Formeln (1), (2), (3), (4), (5) und (6) 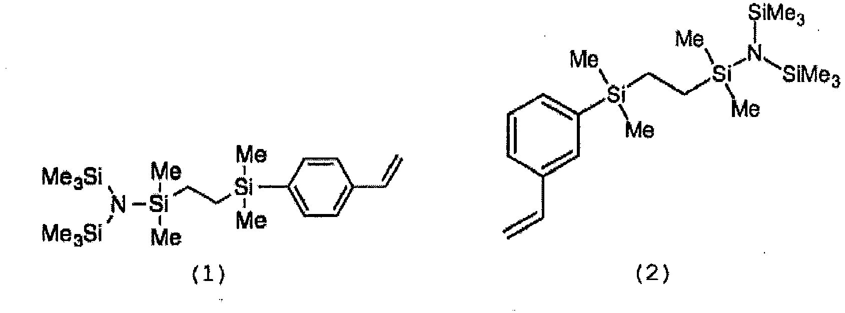 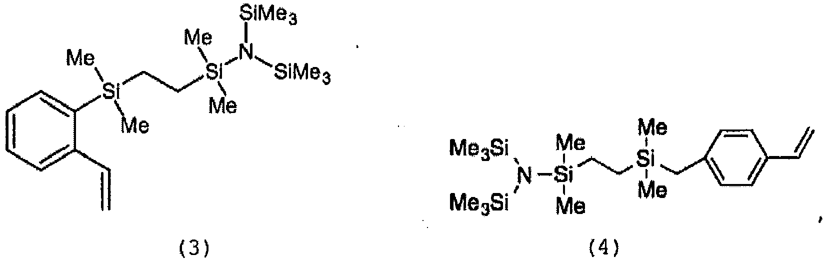 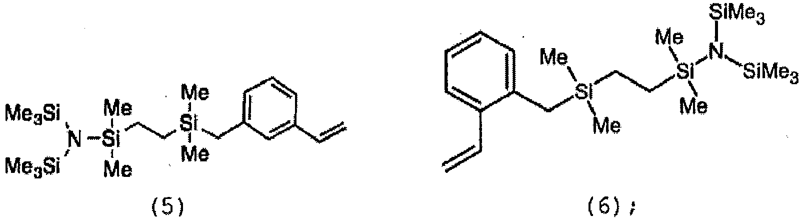 bevorzugter wobei das Styrolderivat der Formel (I) ausgewählt ist aus irgendeiner der Formeln (1), (2), (4) und (5);
insbesondere wobei das Styrolderivat der Formel (I) ausgewählt ist aus irgendeiner der Formeln (1), (4) und (5).

10. Elastomeres Copolymer nach einem der Ansprüche 4 bis 9, wobei die Menge von C) 0,05 bis 50 Gew.-% beträgt, bezogen auf das Gewicht des Copolymers, vorzugsweise 0,2 bis 10 Gew.-%, bezogen auf das Gewicht des Copolymers, insbesondere 0,5 bis 2 Gew.-%, bezogen auf das Gewicht des Copolymers.

11. Elastomeres Copolymer nach einem der Ansprüche 4 bis 10, wobei das Copolymer Einheiten mit einer Sternstruktur aufweist und hergestellt ist durch Umsetzung von Metall-terminiertem lebenden linearen Copolymer mit einem oder mehreren Kopplungsmitteln.

12. Elastomeres Copolymer nach Anspruch 11, wobei das Kopplungsmittel ein Zinnhalogenid-Kopplungsmittel ist,
vorzugsweise wobei das Zinnhalogenid-Kopplungsmittel Zinntetrachlorid ist.

13. Copolymer nach Anspruch 11, wobei das Kopplungsmittel ein Siliciumhalogenid-Kopplungsmittel ist,
vorzugsweise wobei das Siliciumhalogenid-Kopplungsmittel ausgewählt ist aus Siliciumtetrachlorid, Siliciumtetrabromid, Siliciumtetrafluorid, Siliciumtretrajodid, Hexachlordisilan, Hexabromdisilan, Hexafluordisilan, Hexajoddisilan, Oktachlortrisilan, Oktabromtrisilan, Oktafluortrisilan, Oktajodtrisilan, Hexachlordisiloxan, 2,2,4,4,6,6-Hexachlor-2,4,6-trisilaheptan,1,2,3,4,5,6-Hexakis[2-(methyl-dichlorosilyl)ethyl]benzol und Alkylsiliciumhalogeniden mit der allgemeinen Formel (III)
R⁹ₙ-Si-X₄₋ₙ (III),
wobei R⁹ eine einwertige aliphatische Kohlenwasserstoffgruppe mit 1 bis 20 Kohlenstoffatomen oder eine einwertige aromatische Kohlenwasserstoffgruppe mit 6 bis 18 Kohlenstoffatomen ist, n eine Zahl von 0 bis 2 ist und X ein Chlor-, Brom-, Fluor- oder Jodatom sein kann.

14. Elastomeres Copolymer nach einem der Ansprüche 11 bis 13, wobei die Fraktion der Einheiten mit Sternstruktur zwischen 15 und 75 % ausmacht, bezogen auf das Gewicht des Copolymers.

15. Elastomeres Copolymer nach einem der Ansprüche 4 bis 14, wobei ein oder mehrere Anteile vorhanden sind, die gegenüber einer Siliciumdioxid-Oberfläche reaktiv sind,
vorzugsweise wobei der Anteil abgeleitet ist von Einheiten mit der allgemeinen Formel (IV) oder (V)
R¹⁰ₙ-Si-(OR¹¹)₄₋ₙ (IV), 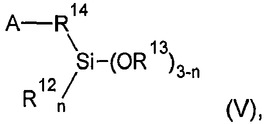
wobei in der allgemeinen Formel (IV) R¹⁰ und R¹¹ jeweils unabhängig eine einwertige aliphatische Kohlenwasserstoffgruppe mit 1 bis 20 Kohlenstoffatomen oder eine einwertige aromatische Kohlenwasserstoffgruppe mit 6 bis 18 Kohlenstoffatomen sind, n eine Zahl von 0 bis 2 ist, wenn es mehrere von OR¹¹ gibt, dann können die mehreren OR¹¹ gleich oder verschieden voneinander sein, und sich in dem Molekül kein aktives Proton befindet, und
wobei in der allgemeinen Formel (V) A eine einwertige Gruppe mit mindestens einer funktionellen Gruppe ausgewählt aus der Gruppe bestehend aus Epoxy, Thioepoxy, Isocyanat, Imin, zyklischem tertiären Amin, azyklischem tertiären Amin, Pyridin, Silazan und Disulfid ist; R¹⁴ eine Einfachbindung oder eine zweiwertige Kohlenwasserstoffgruppe ist, R¹² und R¹³ jeweils unabhängig eine einwertige aliphatische Kohlenwasserstoffgruppe mit 1 bis 20 Kohlenstoffatomen oder eine einwertige aromatische Kohlenwasserstoffgruppe mit 6 bis 18 Kohlenstoffatomen ist, b eine Zahl von 0 bis 2 ist, wenn es mehrere OR¹³ gibt, dann kann die Mehrzahl von OR¹³ gleich oder verschieden voneinander sein, und es kein aktives Proton in dem Molekül gibt.

16. Verfahren zur Herstellung von Kautschuk, bei dem das elastomere Copolymer gemäß einem der Ansprüche 4 bis 15 in Gegenwart von einem oder mehreren Vulkanisierungsmittel(n) vulkanisiert wird.

17. Kautschuk, erhältlich gemäß dem Verfahren von Anspruch 16.

18. Kautschukzusammensetzung umfassend x) eine Kautschukkomponente, die den Kautschuk gemäß Anspruch 17 umfasst.

19. Kautschukzusammensetzung nach Anspruch 18, die ferner y) einen oder mehrere Füllstoff(e) umfasst,
vorzugsweise wobei der Füllstoff ausgewählt ist aus der Gruppe bestehend aus Slilciumdioxid und Ruß,
vorzugsweise wobei die Kautschukzusammensetzung y) sowohl Siliciumdioxid als auch Ruß umfasst.

20. Kautschukzusammensetzung nach Anspruch 19, wobei die Menge an Füllstoffkomponente y) 10 bis 150 Gewichtsteile ausmacht, bezogen auf 100 Gewichtsteile der Kautschukkomponente x) (phr),
vorzugsweise wobei die Menge an Komponente y) 20 bis140 phr beträgt,
bevorzugter, wobei die Menge an Komponente y) 30 bis 130 phr beträgt.

21. Kautschukzusammensetzung nach einem der Ansprüche 18 bis 20, wobei die Kautschukkomponente x) ferner ein oder mehrere weitere kautschukartige oder kautschukähnliche Polymere umfasst.

22. Kautschukzusammensetzung nach Anspruch 21, wobei das weitere kautschukartige oder kautschukähnliche Polymer ausgewählt ist aus der Gruppe bestehend aus Naturkautschuk, Syntheseisoprenkautschuk, Butadienkautschuk, Styrol-Butadien-Kautschuk, Ethylen-a-Olefin-Copolymer-Kautschuk, Ethylen-α-Olefin-Dien-Copolymer-Kautschuk, Acrylnitril-Butadien-Copolymer-Kautschuk, Chloroprenkautschuk und halogeniertem Butylkautschuk.

23. Reifenkomponente, welche die Kautschukzusammensetzung gemäß Anspruch 22 umfasst,
vorzugsweise wobei die Reifenkomponente ein Laufstreifen ist.

24. Reifen, welcher die Reifenkomponente gemäß Anspruch 23 aufweist.

## Revendications

1. Utilisation d'un dérivé de styrène de formule (I) 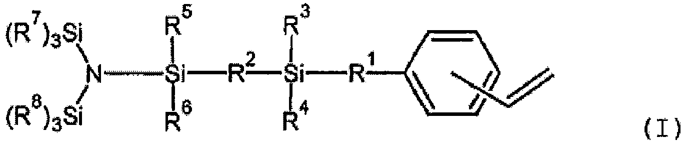
dans laquelle R¹ et R² peuvent être identiques ou différents et représentent un élément sélectionné dans le groupe constitué :
a) d'une liaison simple ;
b) de -(CH₂)ₙ-, dans laquelle n représente un nombre entier allant de 1 à 12 ;
c) de -(CH₂CH₂Y)ₙ-, dans laquelle n représente un nombre entier allant de 1 à 12, et Y peut être indépendamment un oxygène ou un soufre ;
d) de -CH₂-(CH₂CH₂Y)ₙ-CH₂-, dans laquelle n représente un nombre entier allant de 1 à 12, et Y peut être indépendamment un oxygène ou un soufre ;
e) de - (CH₂CH₂NR)ₙ-, dans laquelle n représente un nombre entier allant de 1 à 12, et les R peuvent représenter indépendamment un groupe alkyle contenant 1 à 10 atomes de carbone, ou un groupe aryle ou aralkyle contenant 6 à 10 atomes de carbone ;
f) de -CH₂-(CH₂CH₂NR)ₙ-CH₂-, dans laquelle n représente un nombre entier allant de 1 à 12, et les R peuvent représenter indépendamment un groupe alkyle contenant 1 à 10 atomes de carbone, ou un groupe aryle ou aralkyle contenant 6 à 10 atomes de carbone ;
g) de -(CH₂SiR₂)ₙ-, dans laquelle n représente un nombre entier allant de 1 à 12, et les R peuvent représenter indépendamment un groupe alkyle contenant 1 à 10 atomes de carbone, ou un groupe aryle ou aralkyle contenant 6 à 10 atomes de carbone ;
h) de -CH₂-(CH₂SiR₂)ₙ-CH₂-, dans laquelle n représente un nombre entier allant de 1 à 12, et les R peuvent représenter indépendamment un groupe alkyle contenant 1 à 10 atomes de carbone, ou un groupe aryle ou aralkyle contenant 6 à 10 atomes de carbone ;
i) de -(OSiR₂)ₙ-, dans laquelle n représente un nombre entier allant de 1 à 12, et les R peuvent représenter indépendamment un groupe alkyle contenant 1 à 10 atomes de carbone, ou un groupe aryle ou aralkyle contenant 6 à 10 atomes de carbone ; et
j) de -CH₂-(OSiR₂)ₙ-CH₂-, dans laquelle n représente un nombre entier allant de 1 à 12, et les R peuvent représenter indépendamment un groupe alkyle contenant 1 à 10 atomes de carbone, ou un groupe aryle ou aralkyle contenant 6 à 10 atomes de carbone ;
dans laquelle R³, R⁴, R⁵, et R⁶ peuvent être identiques ou différents et représentent un groupe alkyle contenant 1 à 10 atomes de carbone, ou un groupe aryle ou aralkyle contenant 6 à 10 atomes de carbone ; et
R⁷ et R⁸ peuvent être identiques ou différents, et chaque R⁷ et R⁸ représente indépendamment un groupe alkyle contenant 1 à 10 atomes de carbone, ou un groupe aryle ou aralkyle contenant 6 à 10 atomes de carbone,
dans la production d'un copolymère élastomère.

2. Utilisation selon la revendication 1, dans laquelle le copolymère comprend, en plus des motifs dérivés du dérivé de styrène de formule (I), des motifs dérivés d'un ou de plusieurs monomères de diène et facultativement d'un ou de plusieurs monomères aromatiques de vinyle,
de préférence dans laquelle le monomère de diène est un monomère de diène conjugué.

3. Procédé de production d'un copolymère élastomère comprenant la soumission
- d'un ou de plusieurs monomères de diène,
- facultativement d'un ou de plusieurs monomères aromatiques de vinyle et
- d'un ou de plusieurs dérivés de styrène de formule (I) 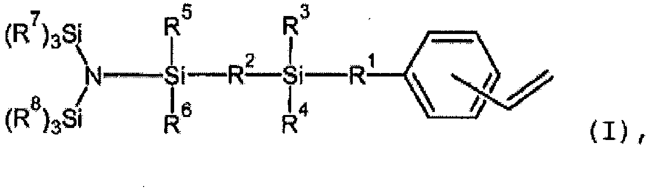
dans laquelle R¹ et R² peuvent être identiques ou différents et représentent un élément sélectionné dans le groupe constitué :
a) d'une liaison simple ;
b) de -(CH₂)ₙ-, dans lequel n représente un nombre entier allant de 1 à 12 ;
c) de -(CH₂CH₂Y)ₙ-, dans lequel n représente un nombre entier allant de 1 à 12, et Y peut être indépendamment un oxygène ou un soufre ;
d) de -CH₂-(CH₂CH₂Y)ₙ-CH₂-, dans lequel n représente un nombre entier allant de 1 à 12, et Y peut être indépendamment un oxygène ou un soufre ;
e) de - (CH₂CH₂NR)ₙ-, dans lequel n représente un nombre entier allant de 1 à 12, et les R peuvent représenter indépendamment un groupe alkyle contenant 1 à 10 atomes de carbone, ou un groupe aryle ou aralkyle contenant 6 à 10 atomes de carbone ;
f) de -CH₂-(CH₂CH₂NR)ₙ-CH₂-, dans lequel n représente un nombre entier allant de 1 à 12, et les R peuvent représenter indépendamment un groupe alkyle contenant 1 à environ 10 atomes de carbone, ou un groupe aryle ou aralkyle contenant 6 à 10 atomes de carbone ;
g) de - (CH₂SiR₂)ₙ-, dans lequel n représente un nombre entier allant de 1 à 12, et les R peuvent représenter indépendamment un groupe alkyle contenant 1 à 10 atomes de carbone, ou un groupe aryle ou aralkyle contenant 6 à 10 atomes de carbone ;
h) de -CH₂-(CH₂SiR₂)ₙ-CH₂-, dans lequel n représente un nombre entier allant de 1 à 12, et les R peuvent représenter indépendamment un groupe alkyle contenant 1 à 10 atomes de carbone, ou un groupe aryle ou aralkyle contenant 6 à 10 atomes de carbone ;
i) de -(OSiR₂)ₙ-, dans lequel n représente un nombre entier allant de 1 à 12, et les R peuvent représenter indépendamment un groupe alkyle contenant 1 à 10 atomes de carbone, ou un groupe aryle ou aralkyle contenant 6 à 10 atomes de carbone ; et
j) de -CH₂-(OSiR₂)ₙ-CH₂-, dans lequel n représente un nombre entier allant de 1 à 12, et les R peuvent représenter indépendamment un groupe alkyle contenant 1 à environ 10 atomes de carbone, ou un groupe aryle ou aralkyle contenant 6 à 10 atomes de carbone ;
dans lequel R³, R⁴, R⁵, et R⁶ peuvent être identiques ou différents et représentent un groupe alkyle contenant 1 à 10 atomes de carbone, ou un groupe aryle ou aralkyle contenant 6 à 10 atomes de carbone ; et
R⁷ et R⁸ peuvent être identiques ou différents, et chaque R⁷ et R⁸ représente indépendamment un groupe alkyle contenant 1 à 10 atomes de carbone, ou un groupe aryle ou aralkyle contenant 6 à 10 atomes de carbone,
à des conditions de polymérisation anionique,
de préférence dans lequel la polymérisation est discontinue ou continue.

4. Copolymère élastomère comprenant des motifs répétitifs qui sont dérivés de
A) 20 % en poids à 99,95 % en poids, en poids du copolymère, d'un ou de plusieurs monomères de diène ;
B) 0 % en poids à 60 % en poids, en poids du copolymère, d'un ou de plusieurs monomères aromatiques de vinyle ; et
C) 0,05 % en poids à 50 % en poids, en poids du copolymère, d'un ou de plusieurs dérivés de styrène de formule (I) 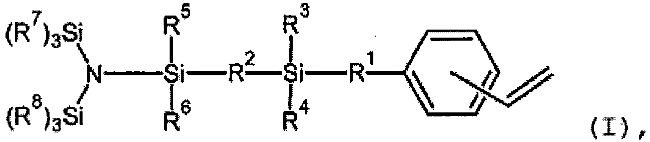
dans laquelle R¹ et R² peuvent être identiques ou différents et représentent un élément sélectionné dans le groupe constitué :
a) d'une liaison simple ;
b) de -(CH₂)ₙ-, dans lequel n représente un nombre entier allant de 1 à 12 ;
c) de -(CH₂CH₂Y)ₙ-, dans lequel n représente un nombre entier allant de 1 à 12, et Y peut être indépendamment un oxygène ou un soufre ;
d) de -CH₂-(CH₂CH₂Y)ₙ-CH₂-, dans lequel n représente un nombre entier allant de 1 à 12, et Y peut être indépendamment un oxygène ou un soufre ;
e) de - (CH₂CH₂NR)ₙ-, dans lequel n représente un nombre entier allant de 1 à 12, et les R peuvent représenter indépendamment un groupe alkyle contenant 1 à 10 atomes de carbone, ou un groupe aryle ou aralkyle contenant 6 à 10 atomes de carbone ;
f) de -CH₂-(CH₂CH₂NR)ₙ-CH₂-, dans lequel n représente un nombre entier allant de 1 à 12, et les R peuvent représenter indépendamment un groupe alkyle contenant 1 à environ 10 atomes de carbone, ou un groupe aryle ou aralkyle contenant 6 à 10 atomes de carbone ;
g) de -(CH₂SiR₂)ₙ-, dans lequel n représente un nombre entier allant de 1 à 12, et les R peuvent représenter indépendamment un groupe alkyle contenant 1 à 10 atomes de carbone, ou un groupe aryle ou aralkyle contenant 6 à 10 atomes de carbone ;
h) de -CH₂-(CH₂SiR₂)ₙ-CH₂-, dans lequel n représente un nombre entier allant de 1 à 12, et les R peuvent représenter indépendamment un groupe alkyle contenant 1 à 10 atomes de carbone, ou un groupe aryle ou aralkyle contenant 6 à 10 atomes de carbone ;
i) de -(OSiR₂)ₙ-, dans lequel n représente un nombre entier allant de 1 à 12, et les R peuvent représenter indépendamment un groupe alkyle contenant 1 à 10 atomes de carbone, ou un groupe aryle ou aralkyle contenant 6 à 10 atomes de carbone ; et
j) de -CH₂-(OSiR₂)ₙ-CH₂-, dans lequel n représente un nombre entier allant de 1 à 12, et les R peuvent représenter indépendamment un groupe alkyle contenant 1 à environ 10 atomes de carbone, ou un groupe aryle ou aralkyle contenant 6 à 10 atomes de carbone ;
dans lequel R³, R⁴, R⁵, et R⁶ peuvent être identiques ou différents et représentent un groupe alkyle contenant 1 à 10 atomes de carbone, ou un groupe aryle ou aralkyle contenant 6 à 10 atomes de carbone ; et
R⁷ et R⁸ peuvent être identiques ou différents, et chaque R⁷ et R⁸ représente indépendamment un groupe alkyle contenant 1 à 10 atomes de carbone, ou un groupe aryle ou aralkyle contenant 6 à 10 atomes de carbone.

5. Copolymère élastomère selon la revendication 4 dans lequel le monomère de diène est un monomère de diène conjugué,
de préférence dans lequel le monomère de diène conjugué est sélectionné parmi le 1,3-butadiène, l'isoprène, le 1,3-pentadiène, le 2,3-diméthyl-1,3-butadiène, le 2-méthyl-1,3-pentadiène, le 2,3-diméthyl-1,3-pentadiène, le 2-phényl-1,3-butadiène, et le 4,5-diméthyl-1,3-octadiène,
de manière davantage préférée dans lequel le monomère de diène conjugué est sélectionné parmi le 1,3-butadiène et l'isoprène,
en particulier dans lequel le monomère de diène conjugué est le 1,3-butadiène.

6. Copolymère élastomère selon la revendication 5, dans lequel la quantité du ou des monomères de diène conjugué A) est de 40 à 90 % en poids, en poids du copolymère, de préférence de 50 à 90 % en poids, en poids du copolymère, en particulier de 60 à 90 % en poids, en poids du copolymère.

7. Copolymère élastomère selon l'une quelconque des revendications 4 à 6 dans lequel le monomère aromatique de vinyle est sélectionné parmi le styrène, le 1-vinylnaphtalène, le 3-méthylstyrène, le 3,5-di-éthylstyrène, le 4-propylstyrène, le 2,4,6-triméthyl-styrène, le 4-dodécylstyrène, le 3-méthyl-5-n-hexyl-styrène, le 4-phénylstyrène, le 2-éthyl-4-benzyl-styrène, le 3,5-diphénylstyrène, le 2,3,4,5-tétraéthyl-styrène, le 3-éthyl-1-vinylnaphtalène, le 6-isopropyl-1-vinylnaphtalène, le 6-cyclohexyl-1-vinylnaphtalène, le 7-dodécyl-2-vinylnaphtalène, et l'α-méthylstyrène,
de préférence dans lequel le monomère aromatique de vinyle est sélectionné parmi le styrène, le 3-méthylstyrène et l'α-méthylstyrène,
en particulier dans lequel le monomère aromatique de vinyle est le styrène.

8. Copolymère élastomère selon l'une quelconque des revendications 4 à 7 dans lequel la quantité du ou des monomères aromatiques de vinyle B) est de 10 à 60 % en poids, en poids du copolymère, de préférence de 10 à 50 % en poids, en poids du copolymère, en particulier de 20 à 50 % en poids, en poids du copolymère.

9. Copolymère élastomère selon l'une quelconque des revendications 4 à 8 dans lequel R² du dérivé de styrène de formule (I) est (CH₂)₂ ;
de préférence dans lequel le dérivé de styrène est sélectionné parmi l'une quelconque des formules (1), (2), (3), (4), (5), et (6) 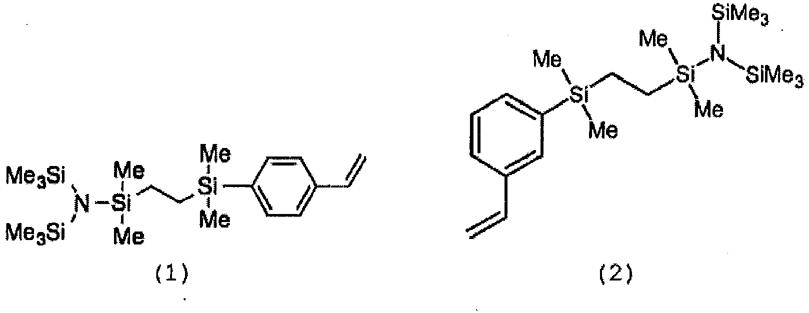 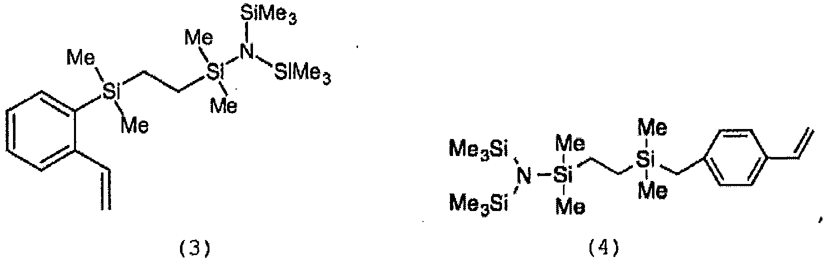 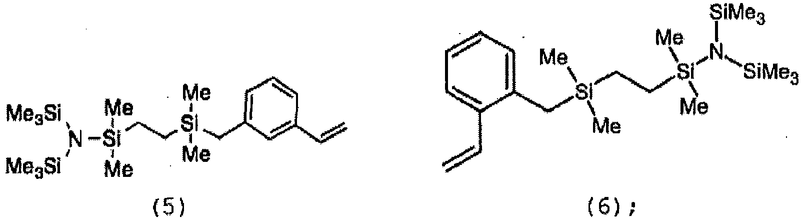 de manière davantage préférée dans lequel le dérivé de styrène de formule (I) est sélectionné parmi l'une quelconque des formules (1), (2), (4), et (5) ;
de manière préférée entre toutes dans lequel le dérivé de styrène de formule (I) est sélectionné parmi l'une quelconque des formules (1), (4), et (5).

10. Copolymère élastomère selon l'une quelconque des revendications 4 à 9 dans lequel la quantité de C) est de 0,05 à 50 % en poids, en poids du copolymère, de préférence de 0,2 à 10 % en poids, en poids du copolymère, en particulier de 0,5 à 2 % en poids, en poids du copolymère.

11. Copolymère élastomère selon l'une quelconque des revendications 4 à 10, dans lequel le copolymère comprend des motifs ayant une structure en étoile et étant produits par la réaction d'un copolymère linéaire vivant à terminaison métallique avec un ou plusieurs agents de couplage.

12. Copolymère élastomère selon la revendication 11, dans lequel l'agent de couplage est un agent de couplage de type halogénure d'étain,
de préférence dans lequel l'agent de couplage de type halogénure d'étain est le tétrachlorure d'étain.

13. Copolymère selon la revendication 11, dans lequel l'agent de couplage est un agent de couplage de type halogénure de silicium,
de préférence dans lequel l'agent de couplage de type halogénure de silicium est sélectionné parmi le tétrachlorure de silicium, le tétrabromure de silicium, le tétrafluorure de silicium, le tétraiodure de silicium, l'hexachlorodisilane, l'hexabromodisilane, l'hexafluorodisilane, l'hexaiododisilane, l'octachlorotrisilane, l'octabromotrisilane, l'octafluorotrisilane, l'octaiodotrisilane, l'hexachlorodisiloxane, le 2,2,4,4,6,6-hexachloro-2,4,6-trisilaheptane, le 1,2,3,4,5,6-hexakis[2-(méthyldichlorosilyl)éthyl]-benzène, et les halogénures d'alkyl silicium de formule générale (III)
R⁹ₙ-Si-X₄₋ₙ (III),
dans laquelle R⁹ est un groupe hydrocarboné aliphatique monovalent contenant 1 à 20 atomes de carbone ou un groupe hydrocarboné aromatique monovalent contenant 6 à 18 atomes de carbone ; n est un nombre entier allant de 0 à 2 ; et X peut être un atome de chlore, de brome, de fluor ou d'iode.

14. Copolymère élastomère selon l'une quelconque des revendications 11 à 13, dans lequel la fraction de motifs ayant une structure en étoile est située entre 15 et 75 %, en poids du copolymère.

15. Copolymère élastomère selon l'une quelconque des revendications 4 à 14, dans lequel un ou plusieurs fragments réactifs vis-à-vis de la surface de la silice sont présents,
de préférence dans lequel le fragment est dérivé de motifs de formule générale (IV) ou (V)
R¹⁰ₙ-Si-(OR¹¹)₄₋ₙ (IV) 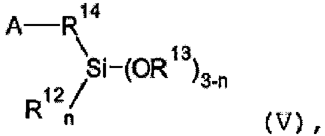
dans laquelle, dans la formule générale (IV), R¹⁰ et R¹¹ sont chacun indépendamment un groupe hydrocarboné aliphatique monovalent contenant 1 à 20 atomes de carbone ou un groupe hydrocarboné aromatique monovalent contenant 6 à 18 atomes de carbone ; n est un nombre entier allant de 0 à 2 ; quand il y a une pluralité de OR¹¹, les OR¹¹ peuvent être identiques ou différents les uns des autres ; et il n'y a pas de proton actif dans la molécule, et
dans laquelle, dans la formule générale (V), A est un groupe monovalent contenant au moins un groupe fonctionnel sélectionné dans le groupe constitué d'un époxy, d'un thioépoxy, d'un isocyanate, d'une imine, d'une amine tertiaire cyclique, d'une amine tertiaire acyclique, de la pyridine, du silazane et du disulfure ; R¹⁴ est une liaison simple ou un groupe hydrocarboné divalent ; R¹² et R¹³ sont chacun indépendamment un groupe hydrocarboné aliphatique monovalent contenant 1 à 20 atomes de carbone ou un groupe hydrocarboné aromatique monovalent contenant 6 à 18 atomes de carbone ; b est un nombre entier allant de 0 à 2 ; quand il y a une pluralité de OR¹³, les OR¹³ peuvent être identiques ou différents les uns des autres ; et il n'y a pas de proton actif dans la molécule.

16. Procédé de préparation d'un caoutchouc comprenant la vulcanisation du copolymère élastomère selon l'une quelconque des revendications 4 à 15 en présence d'un ou de plusieurs agents de vulcanisation.

17. Caoutchouc que l'on peut obtenir selon le procédé selon la revendication 16.

18. Composition de caoutchouc comprenant x) un composant de caoutchouc comprenant le caoutchouc selon la revendication 17.

19. Composition de caoutchouc selon la revendication 18, comprenant en outre y) une ou plusieurs charges,
de préférence dans laquelle la charge est sélectionnée dans le groupe constitué de la silice et du noir de carbone,
de préférence dans laquelle la composition de caoutchouc comprend y) à la fois de la silice et du noir de carbone.

20. Composition de caoutchouc selon la revendication 19, dans laquelle la quantité du composant de charge y) est de 10 à 150 parties en masse par rapport à 100 parties en masse du composant de caoutchouc x) (phr),
de préférence dans laquelle la quantité du composant y) est de 20 à 140 phr,
de manière davantage préférée dans laquelle la quantité du composant y) est de 30 à 130 phr.

21. Composition de caoutchouc selon l'une quelconque des revendications 18 à 20 dans laquelle le composant de caoutchouc x) comprend également un ou plusieurs polymères caoutchouteux supplémentaires.

22. Composition de caoutchouc selon la revendication 21, dans laquelle le polymère caoutchouteux supplémentaire est sélectionné dans le groupe constitué d'un caoutchouc naturel, d'un caoutchouc d'isoprène synthétique, d'un caoutchouc de butadiène, d'un caoutchouc de styrène-butadiène, d'un caoutchouc de copolymère d'éthylène-α-oléfine, d'un caoutchouc de copolymère d'éthylène-α-oléfine-diène, d'un caoutchouc de copolymère d'acrylonitrile-butadiène, d'un caoutchouc de chloroprène et d'un caoutchouc butyle halogéné.

23. Composant de pneu comprenant la composition de caoutchouc selon la revendication 22,
de préférence dans lequel le composant de pneu est une bande de roulement.

24. Pneu comprenant le composant de pneu selon la revendication 23.
